# EUROPEAN PATENT APPLICATION

(11) **EP 4 800 956 A1**
(43) Date of publication of application: **02.09.2026**
(21) Application number: 23956465.1
(22) Date of filing: 26.10.2023
(51) Int. Cl.: H04L 5/00

(54) **COMMUNICATION METHODS, TERMINALS, NETWORK DEVICES, COMMUNICATION SYSTEM AND STORAGE MEDIUM**

(71) Applicant: Beijing Xiaomi Mobile Software Co., Ltd., Beijing 100085 (CN)
(72) Inventor: ZHAO, Qun, Beijing 100085 (CN); DUAN, Gaoming, Beijing 100085 (CN)
(74) Representative: Stöckeler, Ferdinand
(86) International application number: PCT/CN2023/126894
(87) International publication number: WO 2025/086217

(57) **Abstract**

Communication methods, terminals, network devices, a communication system, and a storage medium. A communication method comprises: a terminal measuring a reference signal used for detecting a delay Doppler domain channel; and sending channel state information (CSI) to a network device according to a measurement result, wherein the CSI comprises first information, the first information is used for determining a protection interval of at least one signal or channel, and the protection interval is at least one resource unit on a delay Doppler domain. Using the technical solution of the present disclosure can reduce interference and improve the spectrum efficiency.

## Description

### TECHNICAL FIELD

The disclosure relates to the field of communication technologies, and particularly to a communication method, a terminal, a network device, a communication system, and a storage medium.

### BACKGROUND

In an orthogonal time frequency space (OTFS) system, due to a two-dimensional circular convolution characteristic of a delay-Doppler (DD) domain, at a receiving end, a data symbol of any sending end in the DD domain may be spread over resource elements (REs) of multiple DD domains. The above property may affect reporting of a channel state information (CSI) of a terminal. How to effectively reporting the CSI applicable to the OTFS system is a problem that needs to be solved.

### SUMMARY

Embodiments of the disclosure provide a communication method, a terminal, a network device, a communication system, and a storage medium.

According to a first aspect of embodiments of the disclosure, there is provided a communication method, executed by a terminal, including: measuring, by the terminal, a reference signal for sounding a delay Doppler domain channel; and sending channel state information (CSI) to a network device based on a measurement result, in which the CSI includes first information, and the first information is used to determine a guard interval of at least one type of signals or channels, and the guard interval is at least one resource element in a delay Doppler domain.

According to a second aspect of embodiments of the disclosure, there is provided a communication method, executed by a network device, including: sending a reference signal for sounding a delay Doppler domain channel to a terminal; receiving CSI sent by the terminal, in which the CSI includes first information; and determining a guard interval of at least one type of signals or channels based on the first information, in which the guard interval is at least one resource element in a delay Doppler domain.

According to a third aspect of embodiments of the disclosure, there is provided a terminal, including: a processing module, configured to measure a reference signal for sounding a delay Doppler domain channel; and send CSI to a network device based on a measurement result, in which the CSI includes first information, and the first information is used to determine a guard interval of at least one type of signals or channels, and the guard interval is at least one resource element in a delay Doppler domain.

According to a fourth aspect of embodiments of the disclosure, there is provided a network device, including: a transceiver module, configured to send a reference signal for sounding a delay Doppler domain channel to a terminal; and receive CSI sent by the terminal, in which the CSI includes first information; and a processing module, configured to determine a guard interval of at least one type of signals or channels based on the first information, in which the guard interval is at least one resource element in a delay Doppler domain.

According to a fifth aspect of embodiments of the disclosure, there is provided terminal, including: one or more processors; and a memory, coupled to the one or more processors and configured to store executable instructions. When the executable instructions are executed by the one or more processors, the terminal is caused to execute the communication method according to the first aspect.

According to a sixth aspect of embodiments of the disclosure, there is provided a network device, including: one or more processors; and a memory, coupled to the one or more processors and configured to store executable instructions. When the executable instructions are executed by the one or more processors, the network device is caused to execute the communication method according to the second aspect.

According to a seventh aspect of embodiments of the disclosure, there is provided a communication system, including a terminal and a network device. The terminal is configured to realize the communication method according to the first aspect, and the network device is configured to realize the communication method according to the second aspect.

According to an eighth aspect of embodiments of the disclosure, there is provided a storage medium for storing instructions. When the instructions are run on a communication device, the communication device is caused to execute the communication method according to the first aspect or the second aspect.

By employing the technical solution of the disclosure, the terminal may send more accurate CSI information to the network device. The more accurate CSI information includes the first information for determining the guard interval of the signal/channel, which is convenient for the network device to determine the guard interval of the signal or channel, and then allocate uplink channel resources and downlink channel resources based on the guard interval of the signal or channel, thus reducing interference.

### BRIEF DESCRIPTION OF THE DRAWINGS

In order to more clearly explain the technical solution in embodiments of the disclosure, introduction is made below to accompanying drawings required by description of embodiments. The following accompanying drawings are only some embodiments of the disclosure, but do not cause a detailed limitation on the protection scope of the disclosure.
FIG. 1A is a block diagram illustrating an architecture of a communication system according to embodiments of the disclosure.
FIG. 1B is a block diagram illustrating an orthogonal time frequency space (OTFS) system according to embodiments of the disclosure.
FIG. 2 is a flow chart illustrating an interaction of a communication method according to embodiments of the disclosure.
FIG. 3A is a flow chart illustrating a communication method according to embodiments of the disclosure.
FIG. 3B is a flow chart illustrating a communication method according to embodiments of the disclosure.
FIG. 3C is a flow chart illustrating a communication method according to embodiments of the disclosure.
FIG. 4A is a flow chart illustrating a communication method according to embodiments of the disclosure.
FIG. 4B is a flow chart illustrating a communication method according to embodiments of the disclosure.
FIG. 4C is a flow chart illustrating a communication method according to embodiments of the disclosure.
FIG. 5A is a flow chart illustrating an interaction of a communication method according to embodiments of the disclosure.
FIG. 5B is a flow chart illustrating a communication method according to embodiments of the disclosure.
FIG. 5C is a flow chart illustrating a communication method according to embodiments of the disclosure.
FIG. 6 is a schematic diagram illustrating a guard interval applicable to different functions according to embodiments of the disclosure.
FIG. 7A is a block diagram illustrating a terminal according to embodiments of the disclosure.
FIG. 7B is a block diagram illustrating a network device according to embodiments of the disclosure.
FIG. 8A is a block diagram illustrating a communication device according to embodiments of the disclosure.
FIG. 8B is a block diagram illustrating a chip according to embodiments of the disclosure.

### DETAILED DESCRIPTION

Embodiments of the disclosure provide a communication method, a terminal, a network device, a communication system, and a storage medium.

In a first aspect, embodiments of the disclosure provide a communication method, executed by a terminal. The method includes: measuring, by the terminal, a reference signal for sounding a delay Doppler domain channel; and sending channel state information (CSI) to a network device based on a measurement result, in which the CSI includes first information, and the first information is used to determine a guard interval of at least one type of signals or channels, and the guard interval is at least one resource element in a delay Doppler domain.

In the above embodiments, the terminal measures the reference signal for sounding the delay Doppler domain channel, and sends the CSI to the network device based on the measurement result. Since the CSI includes the first information for determining the guard interval of the at least one type of signals or channels, the terminal feeds back more accurate CSI information to the network device, and the first information may assist the network device in allocating uplink and downlink channel resources, thus reducing interference.

In combination with some embodiments of the disclosure, in some embodiments, the first information includes at least one first measurement information, one of the at least one first measurement information corresponds to one channel path of the delay Doppler domain channel, and the first measurement information includes a parameter value of at least one of: a first parameter item, indicating a delay of the channel path; a second parameter item, indicating a Doppler frequency shift of the channel path; a third parameter item, indicating a complex channel gain of the channel path; or a fourth parameter item, indicating an interference level of the channel path.

In the above embodiments, it is standardized that the first measurement information includes at least one information of the delay of the channel path, the Doppler frequency shift, the complex channel gain, and the interference level. By reporting the first measurement information of at least one channel path to the network device, the terminal may assist the network device to allocate the uplink and downlink channel resources, thus reducing the interference.

In combination with some embodiments of the first aspect, in some embodiments, the first information includes at least one first measurement information, one of the at least one first measurement information corresponds to one channel path of the delay Doppler domain channel, and the first measurement information includes a parameter value of at least one of: a first parameter item, indicating a delay of the channel path; a second parameter item, indicating a Doppler frequency shift of the channel path; or a fifth parameter item, indicating a weighted complex channel gain of the channel path.

In the above embodiments, it is standardized that the first measurement information includes at least one information of the delay of the channel path, the Doppler frequency shift, or the weighted complex channel gain. By reporting the first measurement information of at least one channel path to the network device, the terminal may assist the network device to allocate the uplink and downlink channel resources, thus reducing the interference.

In combination with some embodiments of the first aspect, in some embodiments, the first information includes first measurement information of all channel paths.

In the above embodiments, the CSI carries the first measurement information of all the channel paths in the delay Doppler domain channel, so it is realized that the terminal may report accurate and detailed information of the -delay Doppler domain channel to the network device. In this way, it is convenient for the network device to determine a maximum delay and a maximum Doppler frequency shift of the delay Doppler domain channel, and then it is convenient for the network device to determine the guard interval of any channel or signal, thus reducing the interference. For example, the first information may be used to assist the network device to set an appropriate guard interval between different channels/signals. By setting the appropriate guard interval between different channels/signals, an interference caused by a two-dimensional circular convolution characteristic of the DD domain in the OTFS system may be reduced, and problems of resource (such as, REs) waste and a low spectrum efficiency caused by setting a too large guard interval may be avoided.

In combination with some embodiments of the first aspect, in some embodiments, the first information includes first measurement information of a first channel path, and the first channel path includes at least one channel path with a modulus value of the complex channel gain greater than a first threshold.

In the above embodiments, the terminal reports the first measurement information of the at least one channel path with the modulus value of the complex channel gain greater than the first threshold to the network device, such that not only a certain accuracy requirement of the CSI is met, but also the feedback overhead of the CSI is reduced, and it is also facilitated that the network device determines an appropriate guard interval for signals or channels that do not need to consider the influence of all the channel paths, thus reducing the interference.

In combination with some embodiments of the first aspect, in some embodiments, the first information includes first measurement information of a first channel path, and the first channel path includes at least one channel path with a channel power greater than a first threshold.

In the above embodiments, the terminal reports the first measurement information of the at least one channel path with the channel power greater than the first threshold to the network device, such that not only the certain accuracy requirement of the CSI may be met, but also the feedback overhead of the CSI is reduced, and it is also facilitated that the network device determines the appropriate guard interval for the signals or channels that do not need to consider the influence of all the channel paths, thus reducing the interference.

In combination with some embodiments of the first aspect, in some embodiments, the first information includes first measurement information of first channel paths, and the first channel paths are first N channel paths with the modulus values of the complex channel gains in a descending order.

In the above embodiments, the terminal reports the first measurement information of the N channel paths with the modulus values of the complex channel gains in the descending order to the network device, such that the certain accuracy requirement of the CSI may be met, the feedback overhead of the CSI may also be reduced, and it is also facilitated that the network device determines the appropriate guard interval for the signals or channels that do not need to consider the influence of all the channel paths, thus reducing the interference.

In combination with some embodiments of the first aspect, in some embodiments, the first information includes first measurement information of first channel paths, and the first channel paths are first N channel paths with channel powers in a descending order.

In the above embodiments, the terminal reports the first measurement information of the N channel paths with the channel powers in the descending order to the network device, such that the certain accuracy requirement of the CSI may be met, the feedback overhead of the CSI may also be reduced, and it is also facilitated that the network device determines the appropriate guard interval for the signals or channels that do not need to consider the influence of all the channel paths, thus reducing the interference.

In combination with some embodiments of the first aspect, in some embodiments, a number of channel paths with the modulus value of the complex channel gain greater than the first threshold is less than N, and the first channel path also includes a channel path with the complex channel gain filled to zero, in which a sum of the number of channel paths with the modulus value of the complex channel gain greater than the first threshold and a number of channel paths with the complex channel gain filled to zero is N.

In the above embodiments, it is standardized that the terminal may report the first measurement information of the N channel paths with the modulus value of the complex channel gain greater than the first threshold to the network device. When the number of the channel paths with the modulus value of the complex channel gain greater than the first threshold is less than N, the channel path with the complex channel gain filled to zero is supplemented to achieve the N channel paths.

In combination with some embodiments of the first aspect, in some embodiments, a number of channel paths with the channel power greater than the first threshold is less than N, and the first channel path also includes a channel path with the complex channel gain filled to zero, in which a sum of the number of channel paths with the channel power greater than the first threshold and a number of channel paths with the complex channel gain filled to zero is N.

In the above embodiments, it is standardized that the terminal may report the first measurement information of the N channel paths with the channel power greater than the first threshold to the network device. When the number of the channel paths with the channel power greater than the first threshold is less than N, the channel path with the complex channel gain filled to zero is supplemented to achieve the N channel paths.

In combination with some embodiments of the first aspect, in some embodiments, a number of channel paths with the modulus value of the complex channel gain greater than the first threshold is less than N, and the first channel path only includes the channel paths with the modulus value of the complex channel gain greater than the first threshold.

In the above embodiments, it is standardized that the terminal may report the first measurement information of the N channel paths with the modulus value of the complex channel gain greater than the first threshold to the network device. In a case that the number of channel paths with the modulus value of the complex channel gain greater than the first threshold is less than N, only the channel paths with the modulus value of the complex channel gain greater than the first threshold are reported.

In combination with some embodiments of the first aspect, in some embodiments, a number of channel paths with the channel power greater than the first threshold is less than N, and the first channel paths only include the channel paths with the channel power greater than the first threshold.

In the above embodiments, it is standardized that the terminal may report the first measurement information of the N channel paths with the channel power greater than the first threshold to the network device. In a case that the number of channel paths with the channel power greater than the first threshold is less than N, only the channel paths with the channel power greater than the first threshold are reported.

In combination with some embodiments of the first aspect, in some embodiments, N is configured by the network device.

In the above embodiments, it is standardized that the parameter N may be configured by the network device.

In combination with some embodiments of the first aspect, in some embodiments, the first information includes first measurement information of first channel paths, the first channel paths are first M channel paths with channel powers in a descending order, and a ratio of a sum of channel powers of all the first channel paths to a sum of channel powers of all channel paths is greater than or equal to a second threshold, in which, the second threshold is configured by the network device.

In the above embodiments, the terminal reports the first measurement information of the M channel paths with high channel powers to the network device, and the ratio of the sum of the channel powers of the M channel paths to the sum of the channel powers of all the channel paths is greater than or equal to the second threshold, such that not only the certain accuracy requirement of the CSI is met, but also the feedback overhead of the CSI is reduced, and it is also facilitated that the network device determines the appropriate guard interval for the signals or channels that do not need to consider the influence of all the channel paths, thus reducing the reference. Moreover, a second threshold that the network device may configure to achieve the above effect is standardized.

In combination with some embodiments of the first aspect, in some embodiments, the first information includes first measurement information of first channel paths, the first channel paths are first M channel paths with the modulus values of the complex channel gains in a descending order, and a ratio of a sum of channel powers of all the first channel paths to a sum of channel powers of all channel paths is greater than or equal to a second threshold, in which, the second threshold is configured by the network device.

In the above embodiments, the terminal reports the first measurement information of the M channel paths with high modulus values of the complex channel gains to the network device, and the ratio of the sum of the channel powers of the M channel paths to the sum of the channel powers of all the channel paths is greater than or equal to the second threshold, such that not only the certain accuracy requirement of the CSI is met, but also the feedback overhead of the CSI is reduced, and it is also facilitated that the network device determines the appropriate guard interval for the signals or channels that do not need to consider the influence of all the channel paths, thus reducing the reference. Moreover, a second threshold that the network device may configure to achieve the above effect is standardized.

In combination with some embodiments of the first aspect, in some embodiments, the parameter value of each parameter item in the first measurement information is determined by any of:
determining an actual measurement value of the parameter item as the parameter value of the parameter item, in which the actual measurement value is an integer or a fraction;
determining an integer part of an actual measurement value of the parameter item as the parameter value of the parameter item, in which the actual measurement value is a fraction;
determining an integer part of an actual measurement value of the parameter item as the parameter value of the parameter item, in which the actual measurement value is a fraction, and the first measurement information also includes a sixth parameter item, and the sixth parameter item indicates a common decimal part of all the parameter items or the parameter items of all the first channel paths; or
determining an integer obtained after increasing an actual measurement value of the parameter item as the parameter value of the parameter item, in which the actual measurement value is a fraction.

In the above embodiments, various ways for determining the parameter values of parameter items are standardized to suit different scenarios.

In combination with some embodiments of the first aspect, in some embodiments, the parameter values of the first parameter item and/or the second parameter item in the first measurement information are determined by any of:
determining an actual measurement value of the parameter item as the parameter value of the parameter item, in which the actual measurement value is an integer or a fraction;
determining an integer part of an actual measurement value of the parameter item as the parameter value of the parameter item, in which the actual measurement value is a fraction;
determining an integer part of an actual measurement value of the parameter item as the parameter value of the parameter item, in which the actual measurement value is a fraction, and the first measurement information also includes a sixth parameter item, and the sixth parameter item indicates a common decimal part of all the parameter items or the parameter items of all the first channel paths; or
determining an integer obtained after increasing an actual measurement value of the parameter item as the parameter value of the parameter item, in which the actual measurement value is a fraction.

In the above embodiments, various ways for determining the parameter values of the first parameter items and/or second parameter items are standardized to suit different scenarios.

In combination with some embodiments of the first aspect, in some embodiments, the parameter value of the third parameter item in the first measurement information of the first channel path is determined by determining a value obtained after increasing an actual measurement value of the third parameter item as the parameter value of the third parameter item.

In the above embodiments, the terminal increases the complex channel gain of the reported channel path, it may be compensated a problem that the complex channel gain for subsequent processing is lower than the actual complex channel gain, which is caused by ignoring some channel paths, and it may also be assisted that the network device sets a more accurate guard interval between different channels/signals.

In combination with some embodiments of the first aspect, in some embodiments, the parameter value of the fourth parameter item in the first measurement information of the first channel path is determined by determining a value obtained after decreasing an actual measurement value of the fourth parameter item as the parameter value of the fourth parameter item.

In the above embodiments, the terminal may decrease an interference level of the reported channel paths, which may compensate a problem of signal-to-noise ratio reduction for subsequent processing caused by ignoring some channel paths, thus assisting the network device to set the more accurate guard interval between different channels/signals.

In combination with some embodiments of the first aspect, in some embodiments, the parameter value of the fifth parameter item in the first measurement information of the first channel path is determined by determining a value obtained after increasing an actual measurement value of the fifth parameter item as the parameter value of the fifth parameter item.

The terminal increases the weighted complex channel gain of the reported channel path, which may compensate a problem that a weighted complex channel gain for subsequent processing is lower than the actual weighted complex channel gain caused by ignoring some channel paths, and also may assist the network device to set the more accurate guard interval between different channels/signals.

In combination with some embodiments of the first aspect, in some embodiments, the first information also includes a first maximum delay and/or a first maximum Doppler frequency shift, in which the first maximum delay is a maximum parameter value in the first parameter items of all channel paths, and the first maximum Doppler frequency shift is a maximum parameter value in the second parameter items of all the channel paths.

In some embodiments, in a case that the terminal reports the first measurement information of some channel paths, the terminal additionally reports the maximum delay and maximum Doppler frequency shift of the delay Doppler domain channel, which is convenient for the network device to know the maximum delay and the maximum Doppler frequency shift of the delay Doppler domain channel, thus facilitating the network device to determine the guard interval of any channel or signal and reducing the interference.

In combination with some embodiments of the first aspect, in some embodiments, the interference level includes an interference power and/or a noise power.

In some embodiments, it is standardized that the interference level includes the interference power and/or the noise power.

In combination with some embodiments of the first aspect, in some embodiments, the weighted complex channel gain is determined based on the complex channel gain and the interference level, or the weighted complex channel gain is determined based on a signal-to-noise ratio.

In some embodiments, it is standardized that the weighted complex channel gain of the channel path is standardized, and an influence of the complex channel gain and the interference level of this channel path is considered. It is standardized that the weighted complex channel gain of one channel path is determined based on the signal-to-noise ratio of the channel path.

In combination with some embodiments of the first aspect, in some embodiments, the CSI includes at least one of a rank indicator (RI) of a channel, a precoding matrix indicator (PMI), or a channel quality indicator (CQI).

In some embodiments, in order to more accurately assist scheduling of the base station, the terminal may feed back the at least one of the RI, the PMI, and the CQI.

In combination with some embodiments of the first aspect, in some embodiments, the first information includes at least one second measurement information, one of the at least one second measurement information corresponds to one type of signals or channels, and the second measurement information includes a parameter value of at least one of: a seventh parameter item, indicating a second maximum delay of a second channel path; an eighth parameter item, indicating a second maximum Doppler frequency shift of a second channel path.

In some embodiments, it is standardized that the second measurement information includes at least one of the second maximum delay of the second channel path and the second maximum Doppler frequency shift of the second channel path. The terminal reports the second measurement information to the network device, which may assist the network device to allocate the uplink and downlink channel resources, thus reducing the interference.

In combination with some embodiments of the first aspect, in some embodiments, the first information includes at least one second measurement information, one of the at least one second measurement information corresponds to one type of signals or channels, and the second measurement information includes a parameter value of at least one of: a ninth parameter item, indicating an upper delay limit and a lower delay limit of the second channel path, and the upper delay limit and the lower delay limit being used to determine a delay range; or a tenth parameter item, indicating an upper limit of a Doppler frequency shift and a lower limit of the Doppler frequency shift of a second channel path, and the upper limit of the Doppler frequency shift and the lower limit of the Doppler frequency shift being used to determine a range of the Doppler frequency shift.

In some embodiments, it is standardized that the second measurement information includes at least one of a delay range of the second channel path and the range of the Doppler frequency shift of the second channel path. The terminal reports the second measurement information to the network device, which may assist the network device in allocating the uplink and downlink channel resources, thus reducing the interference.

In combination with some embodiments of the first aspect, in some embodiments, the parameter value of each parameter item in the second measurement information is determined by any of:
determining an actual measurement value of the parameter item as the parameter value of the parameter item, in which, the actual measurement value is an integer or a fraction;
determining an integer part of an actual measurement value of the parameter item as the parameter value of the parameter item, in which the actual measurement value is a fraction;
determining an integer obtained after increasing an actual measurement value of the parameter item as the parameter value of the parameter item, in which, the actual measurement value is a fraction; or
determining an integer part of the actual measurement value of the parameter item as the parameter value of the parameter item, in which the actual measurement value is a fraction, the second measurement information also includes an eleventh parameter item, and the eleventh parameter item indicates a common decimal part of all the parameter items.

In some embodiments, it is standardized that, in a case that a fractional Doppler shift and/or a fractional delay is considered, the terminal determines the integer obtained after increasing the actual measurement value of the parameter item as the parameter value of the parameter item. Alternatively, the terminal determines the integer part of the actual measurement value of the parameter item as the parameter value of the parameter item, and additionally indicates the common decimal part of the remaining parameter items to the network device. In this way, the feedback overhead of the CSI may be reduced.

In combination with some embodiments of the first aspect, in some embodiments, the second channel path includes at least one channel path with a modulus value of a complex channel gain than a third threshold.

In some embodiments, a mode for determining the second channel path is standardized. For example, the second channel path includes at least one channel path with the modulus value of the complex channel gain greater than the third threshold.

In combination with some embodiments of the first aspect, in some embodiments, the second channel path includes at least one channel path with a channel power greater than a third threshold

In some embodiments, the mode for determining the second channel path is standardized. For example, the second channel path includes at least one channel path with the channel power greater than the third threshold.

In combination with some embodiments of the first aspect, in some embodiments, second channel paths exist and are first X channel paths with modulus values of the complex channel gains in a descending order, and the X is configured by the network device.

In some embodiments, a mode for determining the second channel path is standardized. For example, the second channel path is the first x channel paths with the modulus values of the complex channel gains in the descending order.

In combination with some embodiments of the first aspect, in some embodiments, second channel paths exist and are first X channel paths with channel powers in a descending order, and the X is configured by the network device.

In some embodiments, a mode for determining the second channel path is standardized. For example, the second channel path is the first X channel paths with the channel powers in the descending order.

In combination with some embodiments of the first aspect, in some embodiments, second channel paths exist and are first Y channel paths with modulus values of complex channel gains in a descending order, a ratio of a sum of the channel powers of all the second channel paths to a sum of channel powers of all channel paths is greater than or equal to a fourth threshold, and the fourth threshold is configured by the network device.

In some embodiments, a mode for determining the second channel path is standardized. For example, the second channel path is the first Y channel path with the modular values of the complex channel gains in the descending order, and the ratio of the sum of the channel powers of the Y channel paths to the sum of the channel powers of all the channel paths is greater than or equal to the fourth threshold.

In combination with some embodiments of the first aspect, in some embodiments, second channel paths exist and are first Y channel paths with channel powers in a descending order, a ratio of a sum of the channel powers of all the second channel paths to a sum of channel powers of all channel paths is greater than or equal to a fourth threshold, and the fourth threshold is configured by the network device.

In some embodiments, a mode for determining the second channel path is standardized. For example, the second channel path is the first Y channel paths with the channel powers in the descending order, and the ratio of the sum of the channel power of the Y channel paths to the sum of the channel powers of all the channel paths is greater than or equal to the fourth threshold.

In a second aspect, embodiments of the disclosure provide a communication method, executed by a network device, including: sending a reference signal for sounding a delay Doppler domain channel to a terminal; receiving CSI sent by the terminal, in which, the CSI includes first information; and determining a guard interval of at least one type of signals or channels based on the first information, in which, the guard interval is at least one resource element in a delay Doppler domain.

In a third aspect, embodiments of the disclosure provide a terminal, including: at least one of a transceiver module or a processing module. The terminal is configured to execute the alternative implementations of the first aspect.

In a fourth aspect, embodiments of the disclosure provide a network device, including: at least one of a transceiver module or a processing module. The network device is configured to execute the alternative implementations of the second aspect.

In a fifth aspect, embodiments of the disclosure provide a terminal, including: one or more processors. The terminal is configured to execute the alternative implementations of the first aspect.

In a sixth aspect, embodiments of the disclosure provide a network device, including: one or more processors. The network device is configured to execute the alternative implementations of the second aspect.

In a seventh aspect, embodiments of the disclosure provide a communication system, including a terminal and a network device. The terminal is configured to execute the communication method described in the alternative implementations of the first aspect, and the network device is configured to execute the communication method described in the alternative implementations of the second aspect.

In an eight aspect, embodiments of the disclosure provide a storage medium for storing instructions. When the instructions are run on a communication device, the communication device is caused to execute the communication method described in the alternative implementations of the first aspect and the second aspect.

In a ninth aspect, embodiments of the disclosure provide a program product. When the program product is executed by a communication device, the communication device is caused to execute the communication method described in the alternative implementations of the first aspect and the second aspect.

In a tenth aspect, embodiments of the disclosure provide a computer program. When the computer program is run on a computer, the computer is caused to execute the communication method described in the alternative implementations of the first aspect and the second aspect.

In an eleventh aspect, embodiments of the disclosure provide a chip or chip system. The chip or chip system includes a processing circuit configured to execute the communication method described in the alternative implementations of the first aspect and the second aspect above.

It may be understood that all the terminal, the network device, the communication system, the storage medium, the program product, the computer program, the chip or the chip system are configured to execute the method provided by the embodiments of the disclosure. Therefore, achievable beneficial effects may refer to the beneficial effects in the corresponding methods, which is not be repeated here.

Embodiments of the disclosure provide a communication method, a terminal, a network device, a communication system and a storage medium. In some embodiments, terms such as communication method and information processing method, method for feeding back channel state information in an OTFS system and so on may be interchanged, and terms such as communication system, information processing system and system for feeding back channel state information in an OTFS system may be interchanged.

Embodiments of the disclosure are not exhaustive and only serve as illustrations of some embodiments, but not as a detailed limitation on the protection scope of the disclosure. When there is no contradiction, each step in a certain embodiment may be realized as an independent embodiment, and each step may be arbitrarily combined. For example, a solution obtained by removing some steps from a certain embodiment may also be realized as an independent embodiment. A sequence of steps in a certain embodiment may be arbitrarily exchanged. In addition, alternative implementations in a certain embodiment may be arbitrarily combined. Furthermore, different embodiments may be arbitrarily combined. For example, some or all steps of different embodiments may be arbitrarily combined, and a certain embodiment may be arbitrarily combined with alternative implementations of other embodiments.

In various embodiments of the disclosure, unless otherwise specified and in case of logical inconsistency, terms and/or descriptions are consistent in all embodiments, which may be referred with each other. Technical features from different embodiments may be combined to form a new embodiment based on inherent logical relationships of different embodiments.

The terms used in embodiments of the disclosure are only for a purpose of describing specific embodiments and are not intended to limit the disclosure.

In embodiments of the disclosure, unless otherwise specified, an element expressed in a singular form, such as "a", "an", "the", "said", "above", "aforementioned", "this" etc. may mean "one and only one" or may mean "one or more", "at least one", etc. For example, when articles such as "a", "an", or "the" are used in translation, a noun following the article may be understood in the singular form or in the plural form.

In embodiments of the disclosure, "a plurality of" or "multiple" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the disclosure, depending on situations, may include at least one of the following solutions: executing A in some embodiments (executing A independently of B); executing B in some embodiments (executing B independently of A); selecting one of A or B for execution in some embodiments (selectively executing A or B); and executing A and B in some embodiments (executing both A and B). The similar principle applies when there are more parts such as A, B, C, etc.

In some embodiments, expressions such as "A or B", depending on situations, may include the following technical solutions: executing A in some embodiments (executing A independently of B); executing B in some embodiments (executing B independently of A); and selecting one of A or B for execution in some embodiments (selectively executing A or B). The similar principle applies when there are more parts such as A, B, C, etc.

The prefix word such as "first" and "second" in embodiments of the disclosure are used merely to distinguish different described objects and do not limit a position, a sequence, a priority, a quantity, or content of the described objects. For a statement regarding the described object, please refer to claims or the context of descriptions in embodiments, which should not constitute other restrictions due to the use of the prefix word. For example, if the described object is "field", ordinal numbers before the "field" in "first field" and "second field" do not limit a position or a sequence between fields. "First" and "second" do not limit whether "fields" modified by the "first" and "second" are in the same message, nor do an order of the "first field" and the "second field". For another example, if the described object is "level", ordinal numbers before the "level" in "first level" and "second level" do not limit a priority between levels. Furthermore, a quantity of described objects is not limited by the ordinal numbers, which may be one or more objects. Taking "first apparatus" as an example, there may be one or more "apparatus". In addition, different prefix words may modify the same or different objects. For example, if the described object is an "apparatus", "first apparatus" and "second apparatus" may be the same apparatus or different apparatuses, and types of the "first apparatus" and the "second apparatus" may be the same or different. For another example, if the described object is "information", "first information" and "second information" may be same information or different information, and content of the "first information" and the "second information" may be the same or different.

In some embodiments, "including A", "containing A", "configured to indicate A", or "carrying A" may be interpreted as directly carrying A or indirectly indicating A.

In some embodiments, terms such as "time/frequency" and "time-frequency domain" refer to time domain and/or frequency domain.

In some embodiments, terms such as "in response to...", "in response to determining...", "in a case that...", "when...", "if..." etc. may be used interchangeably.

In some embodiments, terms such as "greater than", "greater than or equal to", "not less than", "more than", "more than or equal to", "no less than", "higher than", "higher than or equal to", "not lower than", "above", etc. may be used interchangeably. Terms such as "less than", "less than or equal to", "not greater than", "fewer than", "fewer than or equal to", "no more than", "lower than", "lower than or equal to", "not higher than", "below" etc. may also be used interchangeably.

In some embodiments, apparatus and device may be interpreted as either physical or virtual. Names are not limited to those recorded in the embodiments. Terms such as "apparatus", "equipment", "device", "circuit", "network element", "node", "function", "unit", "section", "system", "network", "chip", "chip system", "entity", "subject", etc. may be used interchangeably.

In some embodiments, "network" may be interpreted as a device included in a network (such as, an access network device, a core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, terms such as "terminal", or "terminal device" may also be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, an access network device, a core network device, or a network device may be replaced with a terminal. For example, a structure in which communication between the access network device, the core network device, the network device or the terminal is replaced by communication between multiple terminals (such as, device-to-device (D2D), vehicle-to-everything (V2X), etc.) may also be applied to embodiments of disclosure. In this case, the terminal may have all or some of functions of the access network device. In addition, terms such as "up" and "down" may also be replaced by terms corresponding to communication between terminals (such as, "side"). For example, an up channel, a down channel, etc. may be replaced by a side channel, and an uplink and a downlink may be replaced by a sidelink.

In some embodiments, the terminal may be replaced by the access network device, the core network device, or the network device. In this case, the access network device, the core network device, or the network device may have all or some of functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the disclosure may be implemented as an independent embodiment. Any combination of any element, any row, or any column may also be implemented as an independent embodiment.

Although the operations are described in a detailed order in the accompanying drawings in embodiments of the disclosure, it should not be understood that these operations are required to be executed in the specific order or serial order illustrated, or all the operations illustrated are required to be executed to obtain the desired results. In a certain circumstance, multitasking and parallel processing may be beneficial. In addition, it is also advantageous to send multiple messages by the same message.

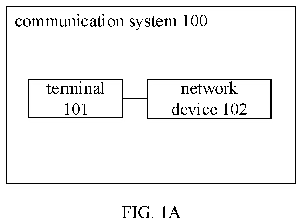

FIG. 1A is a block diagram illustrating an architecture of a communication system according to embodiments of the disclosure. As illustrated in FIG. 1A, a communication system 100 may include a terminal 101 and a network device 102.

In some embodiments, the terminal 101 includes, such as, at least one of a mobile phone, a wearable device, an Internet of Things device, a car with a communication function, a smart car, a tablet (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 includes an access network device and a core network device.

In some embodiments, the access network device may be, such as, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited herein.

In some embodiments, the network device 102 is a base station. Alternatively, the base station is, such as, a macro base station, a micro base station (also called a small station), a relay station, an access point, a 5G base station or a future base station, a satellite, a transmitting and receiving Point (TRP), a transmitting point (TP), a mobile switching center, or other device that undertakes the function of the base station in the communication system, etc., which is not limited in embodiments of the disclosure. For convenience of description, in all embodiments of the disclosure, devices that provide a wireless communication function for the terminal are collectively referred to as network device or base station.

In some embodiments, the network device 102 is a core network device. The core network device may be one device, including a first network element, a second network element, etc., or multiple devices or groups of devices, including all or some of the first network element, the second network element, etc. The network element may be virtual or physical. For example, the core network includes at least one of an evolved packet core (EPC), a 5G core network (5GCN), and a next generation core (NGC).

In some embodiments, the technical solution of the disclosure may be applied to an architecture of the Open RAN. In this case, an interface between access network devices or within the access network device in embodiments of the disclosure may become an internal interface of the Open RAN. Processes and information interaction with the internal interface may be realized via software or programs.

In some embodiments, the access network device may be combined by a central unit (CU) and distributed units (DUs). The CU may also be referred to as a control unit. The use of a CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

It may be understood that the communication system described in embodiments of the disclosure is for the purpose of more clearly explaining the technical solution of embodiments of the disclosure, and does not constitute a limitation on the technical solution proposed in embodiments of the disclosure. Those skilled in the art know that with the evolution of the system architecture and the emergence of new business scenarios, the technical solution proposed in embodiments of the disclosure is also applicable to similar technical problems.

The following embodiments of the disclosure may be applied to the communication system 100 illustrated in FIG. 1A, or to some entities, which are not limited herein. Entities in FIG. 1A are illustrative. The communication system may include all or some of the entities in FIG. 1A, or may include other entities not illustrated in FIG. 1A. The entities may be in any number and in any form. Each entity may be physical or virtual. Connection relationships between the entities are illustrative. The entities may be unconnected or may be connected. The connection may be in any manner, for example, directly connection or indirectly connection, or wired connection or wireless connection.

Embodiments of the disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of multiple systems (e.g., a combination of LTE or LTE-A with 5G) may be applied.

In some embodiments, orthogonal frequency division multiplexing (OFDM) is widely used in a cellular mobile network. In some embodiments, by adding a cyclic prefix (CP), the influence of multipath delay may be well solved. However, a performance of the OFDM system may still deteriorate in time-varying channels. For a higher wireless frequency or a high moving velocity of the terminal, such as, a high speed train scenario, a Doppler frequency shift and a Doppler spread of a wireless channel are relatively large, which causes an inter-carrier interference (ICI) in the OFDM system. Although influence of a Doppler may be reduced by using a larger subcarrier space (SCS), a length of the CP is also reduced proportionally under the premise of a certain overhead, thus causing a fact that the CP may not be enough to combat the influence of the multipath delay.

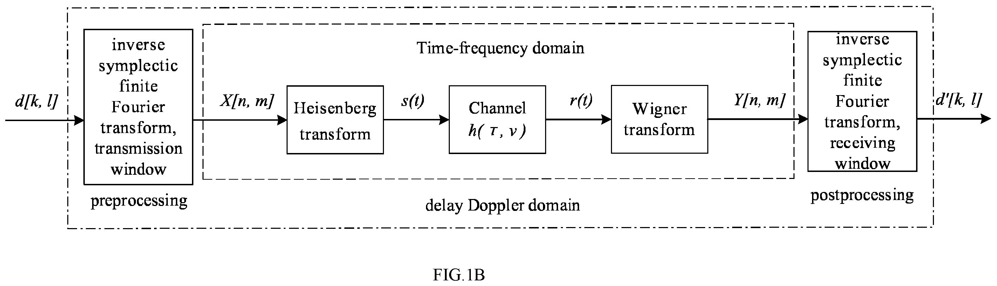

In some embodiments, orthogonal time frequency space is proposed to solve the influence of a high Doppler. As illustrated in FIG. 1B, in the OTFS system, data is first mapped to a two-dimensional grid point in the DD domain, and then transformed to a two-dimensional grid point in a time-frequency (TF) domain by inverse symplectic finite Fourier transform (ISFFT), which is recorded as *X*[*m,n*]. Next, a symbol in the TF domain may be transmitted by a multi-carrier system (such as Heisenberg transform), and a changed signal is recorded as *s*(*t*). For example, the OFDM system may be used for transmission. After a time domain signal of the OTFS passes through the time-varying channel h(τ,ν), a receiving end first transforms (such as Wigner transform) a received signal into the TF domain, and a transformed signal is recorded as *Y*[*n,m*], and the SFFT is performed to restore the transformed signal to the DD domain, to obtain estimation of data symbols, which is recorded as *d'*[*k, l*]*.* In some embodiments, the grid points of the DD domain and the TF domain are collectively referred to as resource units (REs). In some embodiments, in the OTFS system, data symbols on each RE in the DD domain are spread to all REs in the TF domain after the ISFFT transformation, that is, the frequency selectivity and time diversity of all REs in the TF domain are equally undergone. Therefore, all data symbols in the DD domain may be well approximated as undergoing the same time-invariant channel. This property directly affects a reference signal design of the OTFS system. In some embodiments, in an ideal situation, a symbol received by the receiving end in the DD domain is equal to the two-dimensional circular convolution of the symbol in the DD domain of the sending end and the channel h(τ,ν) in the DD domain.

In some embodiments, due to the above properties of the OTFS system, the time-varying channel may be equivalent to the time-invariant channel in the DD domain, and a complete frequency diversity and a complete time diversity may be obtained. The performance of the OTFS system is far better than that of the OFDM system when the Doppler is relatively large. Simultaneously, due to the two-dimensional circular convolution characteristic in the DD domain, some new requirements are also brought for system design and the processing complexity is increased.

In some embodiments, in the OTFS system, due to its two-dimensional circular convolution characteristic in the DD domain, at the receiving end, the data symbol of any sending end in the DD domain is spread to REs of multiple DD domains. The above properties affect the transmission of uplink and downlink reference signals and data channels, and also affect reporting the CSI of the UE. How to effectively report CSI information applicable to the OTFS system is a problem that needs to be solved. In view of this, embodiments of the disclosure provide a communication method, a terminal, a network device, a communication system and a storage medium, to realize that the terminal feeds back accurate and detailed CSI information to the network device. The CSI information includes information of a required guard interval, to assist the base station in allocating the uplink and downlink channel resources and avoid the interference problem caused by the two-dimensional circular convolution characteristic of the OTFS in the DD domain.

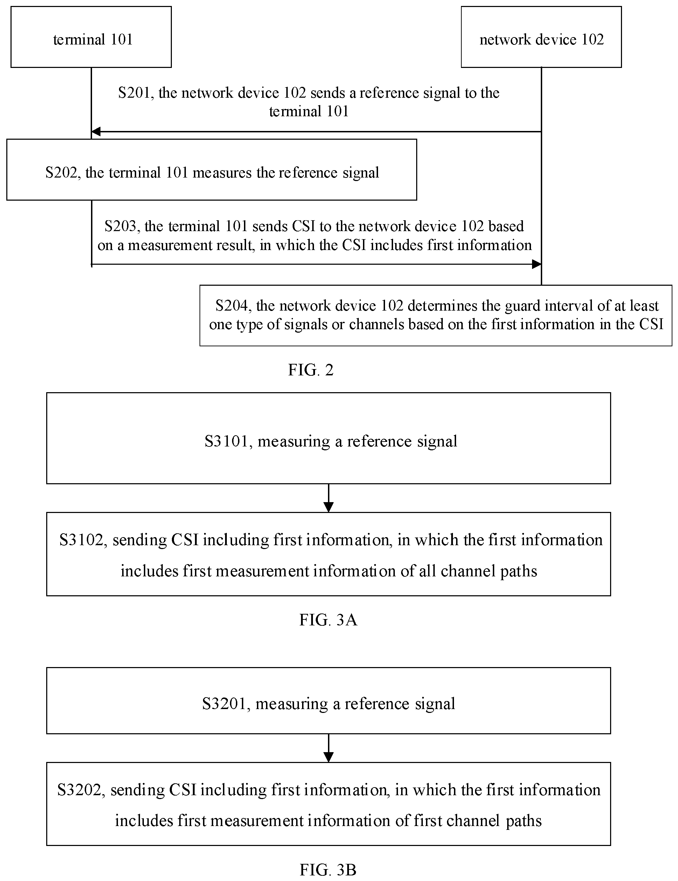

FIG. 2 is a flow chart illustrating an interaction of a communication method according to embodiments of the disclosure. As illustrated in FIG. 2, embodiments of the disclosure relate to a communication method, including the following.

At step S201, the network device 102 sends a reference signal to the terminal 101.

In some embodiments, the reference signal may be a channel state information-reference signal (CSI-RS).

In some embodiments, the reference signal is used to sound state information of a delay Doppler domain channel. Alternatively, the network device sends the reference signal for sounding the delay Doppler domain channel. Alternatively, at least one terminal may measure the reference signal.

At step S202, the terminal 101 measures the reference signal.

In some embodiments, the terminal 101 measures the reference signal for sounding the delay Doppler domain channel, and obtains a measurement result.

In some embodiments, a name of the measurement result is not limited, such as, an initial measurement report, a record table of measurement items and measurement values, etc.

At step S203, the terminal 101 sends CSI to the network device 102 based on a measurement result, in which the CSI includes first information.

In some embodiments, the network device 102 receives the CSI sent by the terminal 101.

Alternatively, the channel path is determined by the following mode. In a case that the terminal measures a possible channel path of the delay Doppler domain channel, it is determined whether the channel path exists or not through a preset criterion. For example, in a case that a measurement value corresponding to the channel path exceeds a threshold, it is considered that the channel path exists, otherwise, it is considered that the measurement value only includes noise and there is no corresponding channel path. The threshold above may be determined by the terminal. For example, if a standard deviation of noise is σ, the threshold may be set to 3σ. Alternatively, it is assumed that the above threshold is cσ. In some embodiments, the base station may configure a parameter c, and the parameter c is used for channel measurement of the terminal.

In some embodiments, the first information is used to determine a guard interval of at least one type of signals or channels. Alternatively, the guard interval is at least one resource unit in the delay Doppler domain. The guard interval is a resource unit with a power being 0 around the above one channel or signal. In some embodiments, a name of the guard interval is not limited, such as, a guard RE, a guard band, a protection band, etc.

In some embodiments, the first information is used to indicate a recommendation parameter of the guard interval.

In some embodiments, the first information is used to determine a guard interval of a first type of signals or channels. Alternatively, for the first type of signals/channels, there needs to accurately estimate state information of all channel paths or as many channel paths as possible in the delay Doppler domain channel, to maximize performance of uplink and downlink data transmission. For example, the first type of signals are demodulation reference signals (DMRSs).

In some embodiments, the first information is used to determine a guard interval of a second type of signals or channels. Alternatively, for the second type of signals/channels, there no need to estimate state information of all the channel paths in the delay Doppler domain channel.

In some embodiments, a name of the first information is not limited, such as guard interval indication information, guard band parameter, etc.

In some embodiments, the first information includes explicit measurement information of the channel path in the delay Doppler domain channel. Alternatively, the first information includes first measurement information corresponding to at least one channel path.

Alternatively, the first information includes at least one first measurement information. Alternatively, one of the at least one first measurement information corresponds to one channel path of the delay Doppler domain channel.

In some embodiments, a name of the first measurement information is not limited, such as explicit measurement information, first parameter set, guard interval indication information, an indication parameter, etc.

In some embodiments, the first measurement information includes a parameter value of at least one of:
a first parameter item, indicating a delay of the channel path;
a second parameter item, indicating a Doppler frequency shift of the channel path;
a third parameter item, indicating a complex channel gain of the channel path;
a fourth parameter item, indicating an interference level of the channel path; or
a fifth parameter item, indicating a weighted complex channel gain of the channel path.

Alternatively, the first measurement information includes a parameter value of at least one of the first parameter item, the second parameter item, the third parameter item, and the fourth parameter item. For example, the first measurement information includes parameter values of the first parameter item, the second parameter item, the third parameter item, and the fourth parameter item.

Alternatively, the first measurement information includes a parameter value of at least one of the first parameter item, the second parameter item, and the fifth parameter item. For example, the first measurement information includes parameter values of the first parameter item, the second parameter item, and the fifth parameter item.

In some embodiments, the interference level includes an interference power and/or noise power. Alternatively, the interference level includes an interference power and a noise power.

In some embodiments, the weighted complex channel gain is determined based on the complex channel gain and the interference level. For example, a weighted complex channel gain of a p^{th} channel path is ${r}_{p} = {h}_{p} / \sqrt{I + N}$, where hₚ is a complex channel gain of the p^{th} channel path, I is an interference power suffered by the terminal and n is a noise power.

In some embodiments, the weighted complex channel gain is determined based on the signal-to-noise ratio. For example, the weighted complex channel gain is a square root of the signal-to-noise ratio.

In some embodiments, the first information includes first measurement information of all the channel paths in the delay Doppler domain channel. Alternatively, the first measurement information of each channel path may include parameter values of a first parameter item, a second parameter item, a third parameter item, and a fourth parameter item. Alternatively, the parameter values of the first parameter items of respective channel paths may be the same or different. Alternatively, the parameter values of the second parameter items of respective channel paths may be the same or different. Alternatively, the parameter values of the third parameter items of respective channel paths may be the same or different. Alternatively, the parameter values of the fourth parameter items of respective channel paths may be the same or different.

Alternatively, the first measurement information of each channel path may include the parameter values of the first parameter item, the second parameter item, and the fifth parameter item. Alternatively, the parameter values of the first parameter items of respective channel paths may be the same or different. Alternatively, the parameter values of the second parameter items of respective channel paths may be the same or different. Alternatively, the parameter values of the fifth parameter items of respective channel paths may be the same or different.

In some embodiments, the parameter value of each parameter item in the first measurement information is determined by any of the following modes.

In a first mode, in a case that the actual measurement value of the parameter item is an integer or a fraction, the actual measurement value of the parameter item may be determined as the parameter value of the parameter item.

In a second mode, in a case that the actual measurement value of the parameter item is a fraction, an integer part of the actual measurement value of the parameter item may be determined as the parameter value of the parameter item. Alternatively, the integer part of the actual measurement value of the parameter item may be an integer obtained by rounding the actual measurement value of the parameter item.

In a third mode, in a case that the actual measurement value of the parameter item is a fraction, an integer part of the actual measurement value of the parameter item may be determined as the parameter value of the parameter item. Alternatively, the integer part of the actual measurement value of the parameter item may be a remaining part after removing a decimal part.

In a fourth mode, in a case that the actual measurement value of the parameter item is a fraction, an integer obtained after increasing the actual measurement value of the parameter item may be determined as the parameter value of the parameter item. Alternatively, a scaling factor may be configured by the network device. Alternatively, a scaling coefficient may be obtained by terminal processing.

In some embodiments, in a case that the parameter value of the parameter item with the actual measurement value being the fraction is determined by the above second mode or third mode, the first measurement information may also include a sixth parameter item, in which the sixth parameter item indicates a common decimal part of the parameter items of all the channel paths. For example, the common decimal part may be determined based on a mean or a standard deviation of the decimal parts in the actual measurement values of the parameter items of all the channel paths. For example, it is assumed that there are two channel paths, namely channel path A and channel path B. A first parameter term of the channel path A and a first parameter term of the channel path B are determined by the above third mode. In this case, the first measurement information may also include a sixth parameter item and the sixth parameter item indicates the common decimal part of the first parameter item of the channel path A and the first parameter item of the channel path B..

In some embodiments, in some embodiments, in a case that the parameter value of the parameter item with the actual measurement value being that fraction is determined by the above second mode or third mode, the first information may also include that sixth parameter item, and the sixth parameter item indicates the common decimal part of the parameter items of all the channel paths.

In some embodiments, the first information includes first measurement information of some channel paths in the delay Doppler domain channel.

In some embodiments, by ignoring a weak channel path, it is beneficial to reduce the overhead of the guard interval, avoid the waste of resources, and improve the spectrum efficiency, and an introduced interference may also be controlled to remain at a relatively small level. Therefore, some channel paths may be all strong channel paths, and all the strong channel paths are some of all the channel paths. Alternatively, in an embodiment, the first information includes the first measurement information of some channel paths in the delay Doppler domain channel is that the first information includes the first measurement information of the strong channel paths in the delay Doppler domain channel.

The strong channel path refers to a channel path that meets a condition.

For example, the strong channel path may refer to the channel path with the modulus value of the complex channel gain greater than with the first threshold.

For example, the strong channel path may refer to the channel path with the channel power greater than the first threshold.

For example, in some embodiments, since the strong channel paths in wireless channels are generally some channel paths with small delays and/or small Doppler frequency shifts, the strong channel paths may be channel paths with the delays each lower than a preset delay threshold. Alternatively, the strong channel paths may be channel paths with the Doppler frequency shifts each lower than a preset Doppler frequency shift threshold.

In some embodiments, some channel paths may refer to the first channel paths hereinafter, and all the first channel paths are some of all the channel paths. Alternatively, in another embodiment, the first information includes the first measurement information of some channel paths in delay Doppler domain channel is that the first information includes first measurement information of the first channel paths in the delay Doppler domain channel. An example is made to some implementations in which the first information includes first measurement information of the first channel paths in the delay Doppler domain channel.

In some embodiments, the first information includes the first measurement information of the first channel paths, and the first channel paths includes at least one channel path with the modulus value of the complex channel gain greater than the first threshold. For example, the first channel paths include one or two or all the channel paths with the modulus value of the complex channel gain greater than the first threshold.

In some embodiments, in a case that the network device instructs the terminal to carry first measurement information of N channel paths in the first information, the first information may include the first measurement information of the first channel paths, in which the first channel paths are channel paths with the modulus values of the complex channel gains each greater than the first threshold. In a case that the number of the first channel paths is greater than N, the first information includes first measurement information of first N first channel paths with modulus of complex channel gains in a descending order. In a case that the number of first channel paths is equal to N, the first information includes first measurement information of all the first channel paths. In a case that the number of first channel paths is less than N, the first information includes the first measurement information of all the first channel paths, and first measurement information of a channel path with the complex channel gain filled to zero, or the first information merely includes the first measurement information of all first channel paths. It should be noted here that the number of channel paths with the complex channel gain filled to zero is equal to an absolute value of a difference between N and the number of first channel paths.

In some embodiments, the first information includes the first measurement information of the first channel path, and the first channel path includes at least one channel path with the channel power greater than the first threshold. For example, the first channel path includes one or two or all the channel paths with the channel powers each greater than the first threshold.

In some embodiments, in a case that the network device instructs the terminal to carry first measurement information of N channel paths in the first information, the first information may include the first measurement information of the first channel paths, in which the first channel paths are channel paths with the channel powers each greater than the first threshold. In a case that the number of the first channel paths is greater than N, the first information includes first measurement information of first N first channel paths with channel powers in a descending order. In a case that the number of first channel paths is equal to N, the first information includes first measurement information of all the first channel paths. In a case that the number of first channel paths is less than N, the first information includes the first measurement information of all the first channel paths, and first measurement information of a channel path with the complex channel gain filled to zero, or the first information merely includes the first measurement information of all first channel paths. It should be noted here that the number of channel paths with the complex channel gain filled to zero is equal to an absolute value of a difference between N and the number of first channel paths.

Alternatively, the first threshold may be configured by the network device or processed by the terminal.

In some embodiments, in a case that the network device instructs the terminal to carry first measurement information of N channel paths in the first information, the first information may include first measurement information of first N channel paths with modulus values of complex channel gains in a descending order.

In some embodiments, in a case that the network device instructs the terminal to carry first measurement information of first channel paths in the first information, in which the first channel paths meet the following condition. The first channel paths is first M channel paths with modulus values of complex channel gains in a descending order, and a ratio of a sum of channel powers of the M first channel paths to a sum of a channel powers of all the channel paths is greater than or equal to the second threshold. Alternatively, the second threshold is configured by the network device. Alternatively, the second threshold is processed by the terminal.

In some embodiments, in a case that the network device instructs the terminal to carry first measurement information of N channel paths in the first information, the first information may include first measurement information of first N channel paths with channel powers in a descending order.

In some embodiments, in a case that the network device instructs the terminal to carry first measurement information of first channel path in the first information, in which the first channel paths meet the following condition. The first channel paths is first M channel paths with channel powers in a descending order, and a ratio of a sum of channel powers of the M first channel paths to a sum of channel powers of all the channel paths is greater than or equal to the second threshold. Alternatively, the second threshold is configured by the network device. Alternatively, the second threshold is processed by the terminal.

Alternatively, first measurement information of each first channel path includes parameter values of the first parameter item, the second parameter item, the third parameter item, and the fourth parameter item. Alternatively, a first measurement information of each first channel path includes parameter values of the first parameter item, the second parameter item, and the fifth parameter item.

In some embodiments, a parameter value of each parameter item in the first measurement information of any first channel path is determined by any of the following modes.

In a first mode, in a case that the actual measurement value of the parameter item is an integer or a fraction, the actual measurement value of the parameter item may be determined as the parameter value of the parameter item.

In a second mode, in a case that the actual measurement value of the parameter item is a fraction, an integer part of the actual measurement value of the parameter item may be determined as the parameter value of the parameter item. Alternatively, the integer part of the actual measurement value of the parameter item may be an integer obtained by rounding the actual measurement value of the parameter item.

In a third mode, in a case that the actual measurement value of the parameter item is a fraction, an integer part of the actual measurement value of the parameter item may be determined as the parameter value of the parameter item. Alternatively, the integer part of the actual measurement value of the parameter item may be a remaining part after removing a decimal part.

In a fourth mode, in a case that the actual measurement value of the parameter item is a fraction, an integer obtained after increasing the actual measurement value of the parameter item may be determined as the parameter value of the parameter item. Alternatively, a scaling factor may be configured by the network device. Alternatively, a scaling coefficient may be obtained by terminal processing.

In some embodiments, in a case that the parameter value of the parameter item with the actual measurement value being the fraction is determined by the above second mode or third mode, the first measurement information may also include the sixth parameter item, and the sixth parameter item indicates the common decimal part of the parameter items of all the channel paths. The common decimal part may be determined based on a mean or a standard deviation of the decimal parts in the actual measurement values of the parameter items of all the first channel paths.

In some embodiments, in a case that the parameter value of the parameter item with the actual measurement value being the fraction is determined by the above second mode or third mode, the first information may also include the sixth parameter item, and sixth parameter item indicates the common decimal part of the parameter items of all the first channel paths. The common decimal part may be determined based on a mean or a standard deviation of the decimal parts in the actual measurement values of the parameter items of all the first channel paths.

In some embodiments, the parameter values of the first parameter item and/or the second parameter item in the first measurement information of any first channel path is determined by any of the following modes.

In a first mode, in a case that the actual measurement value of the parameter item is an integer or a fraction, the actual measurement value of the parameter item may be determined as the parameter value of the parameter item.

In a second mode, in a case that the actual measurement value of the parameter item is a fraction, an integer part of the actual measurement value of the parameter item may be determined as the parameter value of the parameter item. Alternatively, the integer part of the actual measurement value of the parameter item may be an integer obtained by rounding the actual measurement value of the parameter item.

In a third mode, in a case that the actual measurement value of the parameter item is a fraction, an integer part of the actual measurement value of the parameter item may be determined as the parameter value of the parameter item. Alternatively, the integer part of the actual measurement value of the parameter item may be a remaining part after removing a decimal part.

In a fourth mode, in a case that the actual measurement value of the parameter item is a fraction, an integer obtained after increasing the actual measurement value of the parameter item may be determined as the parameter value of the parameter item. Alternatively, a scaling factor may be configured by the network device. Alternatively, a scaling coefficient may be obtained by terminal processing.

In some embodiments, in a case that the parameter value of the parameter item with the actual measurement value being the fraction is determined by the above second mode or third mode, the first measurement information may also include the sixth parameter item, and the sixth parameter item indicates the common decimal part of the parameter items of all the channel paths. The common decimal part may be determined based on a mean or a standard deviation of the decimal parts in the actual measurement values of the parameter items of all the first channel paths.

In some embodiments, in a case that the parameter value of the parameter item with the actual measurement value being the fraction is determined by the above second mode or third mode, the first information may also include the sixth parameter item, and sixth parameter item indicates the common decimal part of the parameter items of all the first channel paths. The common decimal part may be determined based on a mean or a standard deviation of the decimal parts in the actual measurement values of the parameter items of all the first channel paths.

In some embodiments, the parameter value of the third parameter item in the first measurement information of any first channel path is determined by determining a value obtained after increasing an actual measurement value of the third parameter item as the parameter value of the third parameter item.

In some embodiments, the parameter value of the fourth parameter item in the first measurement information of any first channel path is determined by determining a value obtained after decreasing an actual measurement value of the fourth parameter item as the parameter value of the fourth parameter item.

In some embodiments, the parameter value of the fifth parameter item in the first measurement information of any first channel path is determined by determining a value obtained after increasing an actual measurement value of the fifth parameter item as the parameter value of the fifth parameter item.

In some embodiments, in a case that the first information includes first measurement information of some channel paths in the delayed Doppler domain channel, the first information may also include a first maximum delay and/or a first maximum Doppler frequency shift. The first maximum delay is a maximum parameter value in first parameter items of all the channel paths in the delay Doppler domain channel. The first maximum Doppler frequency shift is a maximum parameter value in second parameter items of all the channel paths in the delay Doppler domain channel. The first maximum delay and/or the first maximum Doppler frequency shift may be applied to determine the guard interval of the first type of signals or channels.

In some embodiments, the first information includes implicit measurement information of the channel path in the delay Doppler domain channel. Alternatively, the first information includes second measurement information corresponding to at least one type of signals or channels. In some embodiments, a signal/channel of one function corresponds to one type.

Alternatively, the first information includes at least one second measurement information. Alternatively, a second measurement information corresponds to one type of signals or channels.

In some embodiments, a name of the second measurement information is not limited, such as, implicit measurement information, a second parameter set, guard interval indication information, an indication parameter, etc.

In some embodiments, the second measurement information includes a parameter value of at least one of:
a seventh parameter item, indicating a second maximum delay of all second channel paths;
an eighth parameter item, indicating a second maximum Doppler frequency shift of all second channel paths;
a ninth parameter item, indicating an upper delay limit and a lower delay limit of all second channel path, and the upper delay limit and the lower delay limit being used to determine a delay range; or
a tenth parameter item, indicating an upper limit of a Doppler frequency shift and a lower limit of the Doppler frequency shift of a second channel path, and the upper limit of the Doppler frequency shift and the lower limit of the Doppler frequency shift being used to determine a range of the Doppler frequency shift.

Alternatively, the second measurement information includes a parameter value of at least one of the seventh parameter item and the eighth parameter item. For example, the second measurement information includes parameter values of the seventh parameter item and the eighth parameter item.

Alternatively, the second measurement information includes a parameter value of at least one of the ninth parameter item and the tenth parameter item. For example, the second measurement information includes parameter values of the ninth parameter item and the tenth parameter item.

In some embodiments, there is one or more second channel paths. Alternatively, each second channel path corresponds to a delay and/or a Doppler frequency shift. Alternatively, the second maximum delay refers to a maximum value of the delays corresponding to all the second channel paths. Alternatively, the second maximum Doppler frequency shift refers to a maximum value of the Doppler frequency shifts corresponding to all the second channel paths.

In some embodiments, the second channel path includes at least one channel path with the modulus value of the complex channel gain greater than a third threshold. Alternatively, the third threshold is configured by the network device. Alternatively, the third threshold is obtained by the terminal.

In some embodiments, the second channel paths includes at least one channel path with a channel power greater than a third threshold. Alternatively, the third threshold is configured by the network device. Alternatively, the third threshold is obtained by the terminal.

In some embodiments, the second channel paths are first X channel paths with modulus values of complex channels in a descending order. Alternatively, X is configured by the network device. Alternatively, X is obtained by terminal processing.

In some embodiments, the second channel paths are first X channel paths with channel powers in a descending order. Alternatively, X is configured by the network device. Alternatively, X is obtained by terminal processing.

In some embodiments, the second channel paths are first Y channel path with modulus values of the complex channel gains in a descending order, and a ratio of a sum of channel powers of the Y channel paths to a sum of channel powers of all the channel paths is greater than or equal to a fourth threshold. Alternatively, the fourth threshold is configured by the network device. Alternatively, the fourth threshold is obtained by terminal processing.

In some embodiments, the second channel paths are first Y channel paths with channel powers in a descending order, and a ratio of a sum of channel powers of the Y channel paths to a sum of channel powers of all the channel paths is greater than or equal to a fourth threshold. Alternatively, the fourth threshold is configured by the network device. Alternatively, the fourth threshold is obtained by terminal processing.

In some embodiments, network devices may configure different X, Y, fourth thresholds, etc. for different types of signals/channels.

Alternatively, at least one of the second maximum delays, the second maximum Doppler frequency shifts, the delay ranges and the ranges of the Doppler delay shifts corresponding to different types of signals/channels is different.

In some embodiments, a parameter value of each parameter item in the second measurement information is determined by any of the following modes.

In a first mode, in a case that the actual measurement value of the parameter item is an integer or a fraction, the actual measurement value of the parameter item may be determined as the parameter value of the parameter item.

In a second mode, in a case that the actual measurement value of the parameter item is a fraction, an integer part of the actual measurement value of the parameter item may be determined as the parameter value of the parameter item. Alternatively, the integer part of the actual measurement value of the parameter item may be an integer obtained by rounding the actual measurement value of the parameter item.

In a third mode, in a case that the actual measurement value of the parameter item is a fraction, an integer part of the actual measurement value of the parameter item may be determined as the parameter value of the parameter item. Alternatively, the integer part of the actual measurement value of the parameter item may be a remaining part after removing a decimal part.

In a fourth mode, in a case that the actual measurement value of the parameter item is a fraction, an integer obtained after increasing the actual measurement value of the parameter item may be determined as the parameter value of the parameter item. Alternatively, a scaling factor may be configured by the network device. Alternatively, a scaling coefficient may be obtained by terminal processing.

In some embodiments, in a case that the parameter value of the parameter item with the actual measurement value being the fraction is determined by the above second mode or third mode, the second measurement information may also include an eleventh parameter item, and the eleventh parameter item indicates a common decimal part of the parameter items of all the second channel paths. The common decimal part may be determined based on a mean or a standard deviation of the decimal parts in the actual measurement values of the parameter items.

In some embodiments, in a case that the parameter value of the parameter item with the actual measurement value being the fraction is determined by the above second mode or third mode, the first information may also include an eleventh parameter item, and the eleventh parameter item indicates a common decimal part of the parameter items of all the second channel paths. The common decimal part may be determined based on a mean or a standard deviation of the decimal parts in the actual measurement values of the parameter items.

In some embodiments, in the case that the first information includes implicit measurement information of the channel path in the delay Doppler domain channel, the CSI may include at least one of an RI of the channel in the delay Doppler domain channel, a PMI, and a CQI. For example, the CSI includes first information, the first information includes the second measurement information of the second channel path, and the CSI also includes at least one of the RI, the PMI, and the CQI.

At step S204, the network device 102 determines the guard interval of at least one type of signals or channels based on the first information.

The network device may determine the guard interval of the at least one type of signals or channels based on any first information in alternative embodiments of step S203.

In some embodiments, after determining the guard interval of any signal or channel based on the first information, the network device may send the guard interval of any signal or channel to the terminal.

In some embodiments, names of information and the like are not limited to the names recorded in the embodiments. The terms "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip" and the like may be used interchangeably.

In some embodiments, terms such as "codebook", "codeword", "precoding matrix" and the like may be used interchangeably. For example, a codebook may be a set of one or more codewords/precoding matrices.

In some embodiments, the terms "radio", "wireless channel", "wireless", "radio access network (RAN)", "access network (AN)", "RAN-based" and the like may be used interchangeably.

In some embodiments, the terms "synchronization signal (SS)", "synchronization signal block (SSB)", "reference signal (RS)", "pilot", "pilot signal" and the like may be used interchangeably.

In some embodiments, "obtaining", "acquiring", "getting", "receiving", "transmitting", "bidirectional transmission", "sending and/or receiving" may be used interchangeably, which may be interpreted as receiving from another entity, obtaining from a protocol, acquiring from a higher layer, deriving through self-processing, autonomously achieving, and other similar meanings.

The communication method according to embodiments of the disclosure may include at least one of step S201 to step S204. For example, step S203 may be implemented as an independent embodiment, step S204 may be implemented as an independent embodiment, and steps S203 and S204 may be implemented as independent embodiments, which is not limited thereto.

In some embodiments, step S202 and step S203 may be executed simultaneously.

In some embodiments, step S201, step S202, and step S204 are alternative, and one or more of these steps may be omitted or replaced in different embodiments.

In some embodiments, steps S201 to S203 are alternative, and one or more of these steps may be omitted or replaced in different embodiments.

In some embodiments, please refer to other alternative implementations described before or after the corresponding description in FIG. 2.

FIG. 3A is a flow chart illustrating a communication method according to embodiments of the disclosure. As illustrated in FIG. 3A, embodiments of the disclosure relate to a communication method, executed by a terminal side. The communication method includes the following.

At step S3101, a reference signal is measured.

For alternative implementations of step S3101, please refer to the alternative implementations of step S202 in FIG. 2 and other related parts in the embodiment related to FIG. 2, which is not described here.

In some embodiments, the terminal 101 measures the reference information sent by the network device 102 to obtain a measurement result, it is not limited thereto. A reference signal sent by other entity may also be measured.

At step S3102, CSI including first information is sent, in which the first information includes first measurement information of all channel paths.

For alternative implementations of step S3102, please refer to the alternative implementations of step S203 in FIG. 2 and other related parts in the embodiment related to FIG. 2, which is not described here.

In some embodiments, the terminal 101 sends the CSI to the network device 102, but is not limited thereto, and may also send the CSI to other entity.

Alternatively, the CSI is used for the network device 102 to execute a process of determining the guard interval of at least one type of signals or channels based on the first information. For alternative implementations, please refer to the alternative implementations of step S204 in FIG. 2 and other related parts in the embodiments related to FIG. 2, which is not described here.

The communication method according to embodiments of the disclosure may include at least one of step S3101 and step S3102. For example, step S3102 may be implemented as an independent embodiment, but is not limited thereto.

In some embodiments, step S3101 and step S3102 may be executed simultaneously.

In some embodiments, step S3101 is alternative, which may be omitted or replaced in different embodiments.

FIG. 3B is a flow chart illustrating a communication method according to embodiments of the disclosure. As illustrated in FIG. 3B, embodiments of the disclosure relate to a communication method, executed by a terminal side. The communication method includes the following.

At step S3201, a reference signal is measured.

For alternative implementations of step S3201, please refer to the alternative implementations of step S202 in FIG. 2 and step S3101 in FIG. 3A and other related parts in the embodiments related to FIG. 2 and FIG. 3A, which is not described here.

At step S3202, CSI including first information is sent, in which the first information includes first measurement information of first channel paths.

For alternative implementations of step S3202, please refer to the alternative implementations of step S203 in FIG. 2 and step S3102 in FIG. 3A and other related parts in the embodiments related to FIG. 2 and FIG. 3A, which is not described here.

The communication method according to embodiments of the disclosure may include at least one of step S3201 and step S3202. For example, step S3202 may be implemented as an independent embodiment, but is not limited thereto.

In some embodiments, step S3201 and step S3202 may be executed simultaneously.

In some embodiments, step S3201 is alternative, which may be omitted or replaced in different embodiments.

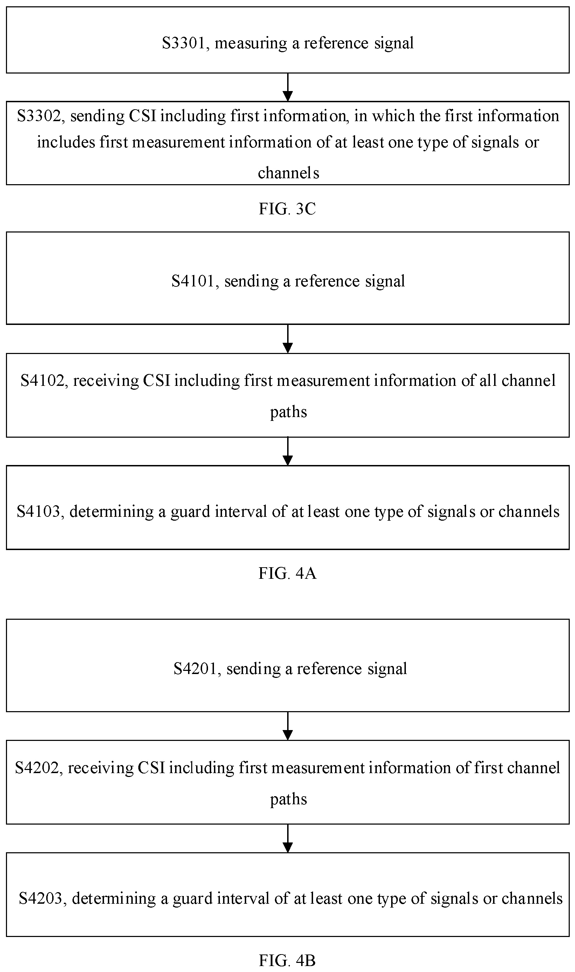

FIG. 3C is a flow chart illustrating a communication method according to embodiments of the disclosure. As illustrated in FIG. 3C, embodiments of the disclosure relate to a communication method, executed by a terminal side. The communication method includes the following.

At step S3301, a reference signal is measured.

For alternative implementations of step S3301, please refer to the alternative implementations of step S202 in FIG. 2 and step S3101 in FIG. 3A and other related parts in the embodiments related to FIG. 2 and FIG. 3A, which is not described here.

At step S3302, CSI including first information is sent, in which the first information includes first measurement information of at least one type of signals or channels.

For alternative implementations of step S3302, please refer to the alternative implementations of step S203 in FIG. 2 and step S3102 in FIG. 3A and other related parts in the embodiments related to FIG. 2 and FIG. 3A, which is not described here.

The communication method according to embodiments of the disclosure may include at least one of step S3301 and step S3302. For example, step S3302 may be implemented as an independent embodiment, but is not limited thereto.

In some embodiments, step S3301 and step S3302 may be executed simultaneously.

In some embodiments, step S3301 is alternative, which may be omitted or replaced in different embodiments.

In embodiments of the disclosure, step S3302 may be combined with step S3102 in FIG. 3A, and step S3302 may be combined with step S3202 in FIG. 3B.

FIG. 4A is a flow chart illustrating a communication method according to embodiments of the disclosure. As illustrated in FIG. 4A, embodiments of the disclosure relate to a communication method, which is executed by a network device side. The communication method includes the following.

At step S4101, a reference signal is sent.

For alternative implementations of step S4101, please refer to the alternative implementations of step S201 in FIG. 2 and other related parts in the embodiments related to FIG. 2, which is not described here.

In some embodiments, the network device 102 sends a reference signal to the terminal 101, but is not limited thereto, and may also send the reference signal to other entity.

Alternatively, the reference signal is used for the terminal 101 to perform a process of measuring the reference signal. For alternative implementations, please refer to the alternative implementations of step S202 in FIG. 2 and other related parts of the embodiments in FIG. 2, which is not repeated here.

At step S4102, CSI including first measurement information of all channel paths is received.

For alternative implementations of step S4102, please refer to the alternative implementations of step S203 in FIG. 2 and other related parts in the embodiments related to FIG. 2, which is not repeated here.

In some embodiments, the network device 102 receives the CSI sent by the terminal 101, but is not limited thereto, and may also receive CSI sent by other entity.

In some embodiments, the network device 102 obtains CSI specified by the protocol.

In some embodiments, the network device 102 obtains CSI from an upper layer(s).

In some embodiments, the network device 102 performs processing to obtain CSI.

In some embodiments, step S4102 is omitted, and the network device 102 autonomously implements functions indicated by the CSI, or the above functions are default.

At step S4103, a guard interval of at least one type of signals or channels is determined.

For alternative implementations of step S4103, please refer to the alternative implementations of step S204 in FIG. 2 and other related parts in the embodiments related to FIG. 2, which is not described here.

The communication method according to the embodiments of the disclosure may include at least one of steps S4101 to S4103. For example, step S4103 may be implemented as an independent embodiment, and steps S4102 and S4103 may be implemented as an independent embodiment, but not limited thereto.

In some embodiments, step S4102 and step S4103 may be executed simultaneously.

In some embodiments, step S4101 and step S4102 are alternative, and one or more of these steps may be omitted or replaced in different embodiments.

FIG. 4B is a flow chart illustrating a communication method according to embodiments of the disclosure. As illustrated in FIG. 4B, embodiments of the disclosure relate to a communication method, which is executed by a network device side. The communication method includes the following.

At step S4201, a reference signal is sent.

For alternative implementations of step S4201, please refer to the alternative implementations of step S201 in FIG. 2 and step S4101 in FIG. 4A, and other related parts of the embodiments related to FIG. 2 and FIG. 4A, which are not repeated here.

At step S4202, CSI including first measurement information of first channel paths is received.

For alternative implementations of step S4202, please refer to the alternative implementations of step S203 in FIG. 2 and step S4102 in FIG. 4A, and other related parts of the embodiments related to FIG. 2 and FIG. 4A, which are not repeated here.

At step S4203, a guard interval of at least one type of signals or channels is determined.

For alternative implementations of step S4203, please refer to the alternative implementations of step S204 in FIG. 2 and step S4103 in FIG. 4A, and other related parts of the embodiments related to FIG. 2 and FIG. 4A, which are not repeated here.

The communication method according to the embodiments of the disclosure may include at least one of steps S4201 to S4203. For example, step S4203 may be implemented as an independent embodiment, and steps S4202 and S4203 may be implemented as an independent embodiment, but not limited thereto.

In some embodiments, step S4202 and step S4203 may be executed simultaneously.

In some embodiments, step S4201 and step S4202 are alternative, and one or more of these steps may be omitted or replaced in different embodiments.

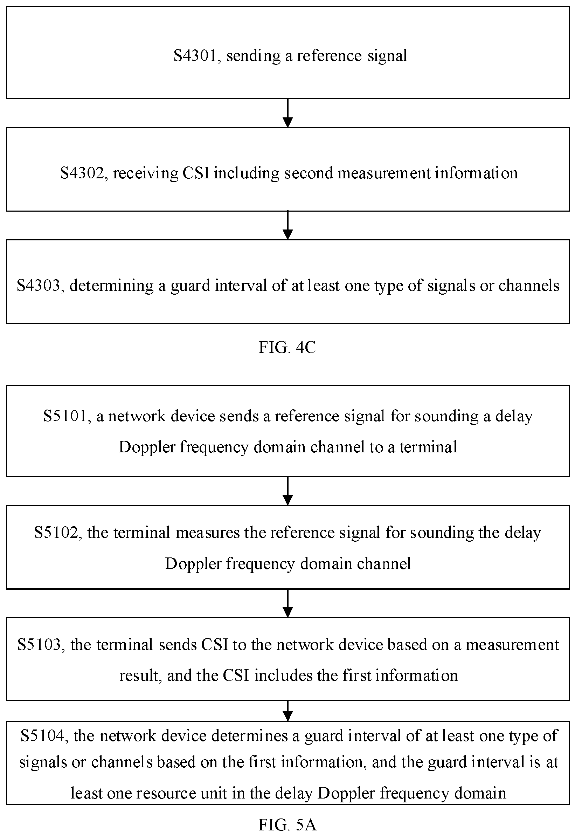

FIG. 4C is a flow chart illustrating a communication method according to embodiments of the disclosure. As illustrated in FIG. 4C, embodiments of the disclosure relate to a communication method, which is executed by a network device side. The communication method includes the following.

At step S4301, a reference signal is sent.

For alternative implementations of step S4301, please refer to the alternative implementations of step S201 in FIG. 2 and step S4101 in FIG. 4A, and other related parts of the embodiments related to FIG. 2 and FIG. 4A, which are not repeated here.

At step S4302, CSI including second measurement information is received.

For alternative implementations of step S4302, please refer to the alternative implementations of step S203 in FIG. 2 and step S4102 in FIG. 4A, and other related parts of the embodiments related to FIG. 2 and FIG. 4A, which are not repeated here.

At step S4303, a guard interval of at least one type of signals or channels is determined.

For alternative implementations of step S4303, please refer to the alternative implementations of step S204 in FIG. 2 and step S4103 in FIG. 4A, and other related parts of the embodiments related to FIG. 2 and FIG. 4A, which are not repeated here.

The communication method according to the embodiments of the disclosure may include at least one of steps S4301 to S4303. For example, step S4303 may be implemented as an independent embodiment, and steps S4302 and S4303 may be implemented as an independent embodiment, but not limited thereto.

In some embodiments, step S4302 and step S4303 may be executed simultaneously.

In some embodiments, step S4301 and step S4302 are alternative, and one or more of these steps may be omitted or replaced in different embodiments.

In embodiments of the disclosure, step S4302 may be combined with step S4102 in FIG. 4A, and step S4302 may be combined with step S4202 in FIG. 4B.

FIG. 5A is a flow chart illustrating an interaction of a communication method according to embodiments of the disclosure. As illustrated in FIG. 5A, embodiments of the disclosure relate to a communication method. The communication method includes the following.

At step S5101, a network device sends a reference signal for sounding a delay Doppler frequency domain channel to a terminal.

For alternative implementations of step S5101, please refer to the alternative implementations of step S201 in FIG. 2 and step S4101 in FIG. 4A, and other related parts of the embodiments related to FIG. 2 and FIG. 4A, which are not repeated here.

At step S5102, the terminal measures the reference signal for sounding the delay Doppler frequency domain channel.

For alternative implementations of step S5102, please refer to the alternative implementations of step S202 in FIG. 2 and step S3101 in FIG. 3A, and other related parts of the embodiments related to FIG. 2 and FIG. 3A, which are not repeated here.

At step S5103, the terminal sends CSI to the network device based on a measurement result, and the CSI includes the first information.

For alternative implementations of step S5103, please refer to the alternative implementations of step S203 in FIG. 2, step S3102 in FIG. 3A, step S3202 in FIG. 3B, step S3302 in FIG. 3C, step S4102 in FIG. 4A, step S4202 in FIG. 4B, and step S4302 in FIG. 4C and other related parts of the embodiments related to FIG. 2, FIG. 3A, FIG. 3B, FIG. 3C, FIG. 4A, FIG. 4B, FIG. 4C, which are not repeated here.

At step S5104, the network device determines a guard interval of at least one type of signals or channels based on the first information, and the guard interval is at least one resource unit in the delay Doppler frequency domain.

For alternative implementations of step S5104, please refer to the alternative implementations of step S204 in FIG. 2 and step S4103 in FIG. 4A, and other related parts of the embodiments related to FIG. 2 and FIG. 4A, which are not repeated here.

In some embodiments, the above methods may include the methods described in the embodiments of the communication system side, the terminal side, the network device side, etc., which are not described in detail here.

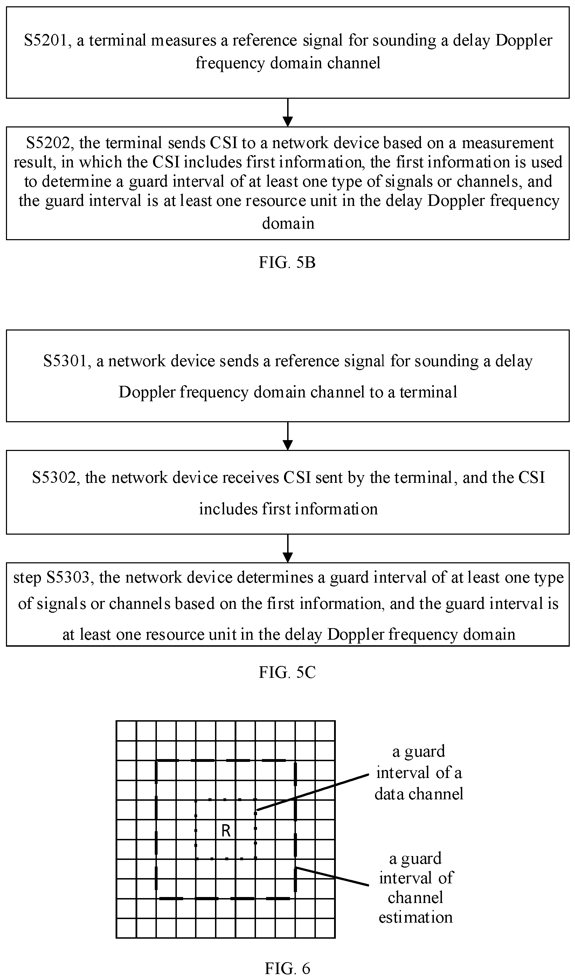

FIG. 5B is a flow chart illustrating a communication method according to embodiments of the disclosure. As illustrated in FIG. 5B, embodiments of the disclosure relate to a communication method. The communication method includes the following.

At step S5201, a terminal measures a reference signal for sounding a delay Doppler frequency domain channel.

For alternative implementations of step S5201, please refer to the alternative implementations of step S202 in FIG. 2 and step S3101 in FIG. 3A, and other related parts of the embodiments related to FIG. 2 and FIG. 3A, which are not repeated here.

At step S5202, the terminal sends CSI to a network device based on a measurement result, in which the CSI includes first information, the first information is used to determine a guard interval of at least one type of signals or channels, and the guard interval is at least one resource unit in the delay Doppler frequency domain.

For alternative implementations of step S5202, please refer to the alternative implementations of step S203 in FIG. 2, step S3102 in FIG. 3A, step S3202 in FIG. 3B, and step S3302 in FIG. 3C, and other related parts of the embodiments related to FIG. 2, FIG. 3A, FIG. 3B, FIG. 3C, which are not repeated here.

In some embodiments, the above methods may include the methods described in the embodiments of the communication system side, the terminal side, the network device side, etc., which are not described in detail here.

FIG. 5C is a flow chart illustrating a communication method according to embodiments of the disclosure. As illustrated in FIG. 5C, embodiments of the disclosure relate to a communication method. The communication method includes the following.

At step S5301, a network device sends a reference signal for sounding a delay Doppler frequency domain channel to a terminal.

For alternative implementations of step S5301, please refer to the alternative implementations of step S201 in FIG. 2 and step S4101 in FIG. 4A, and other related parts of the embodiments related to FIG. 2 and FIG. 4A, which are not repeated here.

At step S5302, the network device receives CSI sent by the terminal, and the CSI includes first information.

For alternative implementations of step S5302, please refer to the alternative implementations of step S203 in FIG. 2, step S4102 in FIG. 4A, step S4202 in FIG. 4B, and step S4302 in FIG. 4C and other related parts of the embodiments related to FIG. 2, FIG. 4A, FIG. 4B, and FIG. 4C, which are not repeated here.

At step S5303, the network device determines a guard interval of at least one type of signals or channels based on the first information, and the guard interval is at least one resource unit in the delay Doppler frequency domain.

For alternative implementations of step S5303, please refer to the alternative implementations of step S204 in FIG. 2 and step S4103 in FIG. 4A, and other related parts of the embodiments related to FIG. 2 and FIG. 4A, which are not repeated here.

In some embodiments, the above method may include the methods described in the embodiments of the communication system side, the terminal side, the network device side, etc., which is not described in detail here.

In some embodiments, in the OTFS system, an equivalent channel h(τ,v) in the DD domain is time-invariant. That is, data symbols on all REs in the DD domain undergo the same channel h(τ,v). Therefore, the UE only needs to feed back one common CSI information to the whole DD domain. By employing the method, the CSI feedback overhead of the UE is reduced.

In some embodiments, due to the two-dimensional circular convolution characteristic of the OTFS in DD the domain, the data symbols in the DD domain of any sending end are spread to REs in multiple DD domains at the receiving end. In detail, assuming that the channel h(τ,v) includes Q paths (respective paths may have different delays and/or Doppler frequencies), the data symbols of the DD domain at each sending end are spread on the REs of P DD domains (P may be greater than or equal to Q, so P may be greater than Q because the data symbols may be spread) at the receiving end. The delay range of each path is [0, *τₘₐₓ*], and the range of the Doppler frequency shift of each path is [-*vₘₐₓ*, *vₘₐₓ*], *τₘₐₓ* is a maximum delay, and *v*ₘₐₓ is the maximum Doppler frequency shift. On the one hand, for the data symbols in the DD domain of the sending end, energy spread to the P paths at the receiving end needs to be collected to improve a receiving performance of the data symbols in the DD domain of the sending end. On the other hand, in a case that data symbols of one DD domain is spread to the REs of the P DD domain at the receiving end, and then the REs are allocated to other channels, the interference between channels may be caused. Especially, in a case that these channels are allocated to different UEs, and one UE can't know scheduling information of other UEs, it is caused that the UE may bot effectively remove the interference of signals from other UEs.

In some embodiments, in order to eliminate the influence of the above two-dimensional circular convolution characteristic, the guard interval may be inserted between different channels/signals. The REs of the DD domain occupied by the guard interval are not used to carry signals, or the symbol carried is 0. The P paths of the channel h(τ,v) have different effects on different channels or signals. For example, FIG. 6 is a schematic diagram illustrating a guard interval applicable to different functions (functions refer to functions of signals/channels). In FIG. 6, the channel/signal to be protected is represented by R. One square in FIG. 6 may be one or more REs representing the DD domain.

In some embodiments, different channels/signals need different sizes of guard intervals. For the first type of channels/signals, such as, a DMRS, accurately estimating state information of all the P paths or as many paths as possible is beneficial to maximize the performance of uplink and downlink data transmission. For example, assuming that *τₘₐₓ* corresponds to L samples in the delay dimension and *vₘₐₓ* corresponds to K samples in the Doppler dimension, a required guard interval may be set as follows. 1) In the delay dimension, L REs are included on both sides of a DMRS symbol. 2) In the Doppler dimension, there are 2K REs on both sides of the DMRS. For example, it is assumed that the DMRS occupies REs of one DD domain for transmission, and the required guard interval occupies (2L+1)(4K+1)-1 REs. In fact, in a case that the influence of fractional Doppler frequency shift and/or delay is considered, the guard interval needs to be increased. For other cases, it is recorded as a second type of channels/signals, such as the guard interval between the data channels of two UEs, and the guard interval may not need to consider the influence of all the P paths. For example, strong paths of actual wireless channels are generally distributed on paths with a small delay and/or Doppler. By ignoring a weak path in the above P paths, the overhead of the guard interval may be reduced, and the introduced interference may still be controlled at a relatively small level.

In some embodiments, when the UE processes a CSI report, information indicating a recommendation parameter of the above guard interval may be carried.

In some embodiments, in an embodiment, in order to feed back the CSI, the UE may measure and report parameters of some or all paths of the channel h(τ,v). In order to assist scheduling of the base station, the UE may also feed back other channel parameters. h(τ,v) corresponds to the delay Doppler frequency domain channel.

In some embodiments, a first method for reporting the CSI is to directly report the delay, Doppler frequency shift, the complex channel gain and the interference level of each of the P paths of the channel h(τ,v). The interference level includes the influence of the interference and the noise. Using employing the method, the CSI report carries accurate information of the channel h(τ,v). The base station may obtain the maximum delay and the maximum Doppler frequency shift based on the information of the channel h(τ,v) reported by the UE, and obtain the size of the guard interval suitable for various channels/signals.

In some embodiments, a second method for reporting the CSI is to directly report the delay, the Doppler frequency shift and the weighted complex channel gain of each of the P paths of the channel h(τ,v). The above weighted complex channel gain jointly considers the influence of the complex channel gain and the interference level of one path. For example, a weighted complex channel gain of the p^{th} path is ${r}_{p} = {h}_{p} / \sqrt{I + N}$, where hₚ is the complex channel gain of the p^{th} path, I is the interference power level suffered by the UE, and N is the noise power, that is, the weighted complex channel gain is equivalent to the square root of the signal-to-noise ratio. Using the method, the CSI report carries the accurate information of the channel h(τ,v). The base station may obtain the maximum delay and maximum Doppler frequency shift based on the channel h(τ,v) reported by the UE, and obtain the size of the guard interval suitable for various channels/signals.

In some embodiments, a third method for reporting the CSI is to report the delay, the Doppler frequency shift, the complex channel gain and the interference level of the strong path (in a case that the modulus value of the complex channel gain of the path is greater than the threshold, or in a case that the channel power of the path is greater than the threshold, the path is determined as the strong path) in the P paths of the channel h(τ,v). Using the method, the feedback overhead of the CSI may be reduced under the condition of meeting a certain CSI accuracy requirement. In the method, a gain of a reported channel decreases since the weak path in the channel h(τ,v) is ignored, and the UE may compensate by increasing the channel gain of the reported path or reducing the interference level of the reported path. With the method, in order to indicate the required guard interval of the first type of channels/signals, the UE needs to report the maximum delay and maximum Doppler frequency shift of the channel h(τ,v) additionally. For the second type of channels/signals, the base station may still obtain the size of the applicable guard interval based on the parameter of the path reported by the UE.

In some embodiments, a fourth method for reporting the CSI is to report the delay, the Doppler frequency shift and the weighted complex channel gain of the strong path (in a case that the modulus value of the complex channel gain of the path is greater than the threshold, or in a case the channel power of the path is greater than the threshold, the path is determined as the strong path) in the P paths of the channel h(τ,v). The above weighted complex channel gain jointly considers the influence of the complex channel gain and the interference level of one path. For example, the weighted complex channel gain of the p^{th} path is ${r}_{p} = {h}_{p} / \sqrt{I + N}$, where hₚ is the complex channel gain of the p^{th} path, I is the interference power level suffered by the UE, and N is the noise power, that is, the weighted complex channel gain is equivalent to the square root of the signal-to-noise ratio. Using the method, the feedback overhead of the CSI may be reduced under the condition of meeting a certain accuracy requirement of the CSI. With the method, for the gain of the reported channel decreasing because the weak path in the channel h(τ,v) is ignored, the UE may compensate by increasing the complex channel gain and the signal-to-noise ratio of the reported path. With this method, in order to indicate the required guard interval of the first type of channels/signals, the UE needs to report the maximum delay and the maximum Doppler frequency shift of the channel h(τ,v) additionally. For the second type of channels/signals, the base station may still obtain the size of the applicable guard interval based on the parameter of the path reported by the UE.

In some embodiments, for the above method, in a case that the fractional Doppler frequency shift and/or delay is considered, the delay and the Doppler frequency shift of each of the above P paths may include an integer part and a decimal part, respectively. Alternatively, in order to reduce the feedback overhead, the delay and Doppler frequency shift of each of the above P paths may only include an integer part, and the UE reports one common fractional Doppler frequency shift and/or delay and applies the common fractional Doppler frequency shift and/or delay to all the P paths. Alternatively, in a case that the influence of the fractional Doppler frequency shift and/or delay is considered, the UE may increase the reported maximum delay and the reported maximum Doppler frequency shift of the channel h(τ,v).

In some embodiments, for the above method, the UE obtains CSI information by measuring a reference signal, such as a CSI-RS. When a possible path of the channel h(τ,v) is measured, the UE needs a criterion to determine whether the path exists. For example, in a case that a measurement value of the path exceeds a threshold, it is considered that the path exists, otherwise it is considered that the measurement value only includes noise. The above threshold may be determined by the UE. For example, it is assumed that the standard deviation of the noise is σ, the threshold may be set to 3σ. Alternatively, it is assumed that the above threshold is cσ, the base station may configure the parameter c for channel measurement of the UE. Alternatively, the base station may directly configure a number x of strong paths that the UE needs to report. In a case that the number of paths actually detected by the UE is less than X, the channel gains of (X-x) paths may be filled with 0 by the UE, or the UE may report only the parameters of the x paths of the channel h(τ,v). Alternatively, the base station may configure a threshold Y%, and a ratio of a total channel gain of respective paths reported by the UE to a total channel gain of all the P paths of the channel h(τ,v) is greater than or equal to Y%. Alternatively, the base station may configure a threshold Y%, and a ratio of a total channel power of respective path reported by the UE to a total channel power of all the P paths of the channel h(τ,v) is greater than or equal to Y%.

In some embodiments, in order to feed back the CSI, the UE may measure and report the RI, the PMI and the CQI of the channel. In order to assist scheduling of the base station, the UE also needs to feed back the information of the required guard interval.

In some embodiments, the first method for reporting the CSI is that, in addition to reporting the RI, the PMI and the CQI, the UE needs to report the maximum delay and maximum Doppler frequency shift for determining the guard interval required by the first type of channels/signals, and the maximum delay and maximum Doppler frequency shift for determining the guard interval required by the second type of channels/signals. Alternatively, the channels/signals may be divided into multiple types, and the UE reports the maximum delay and the maximum Doppler frequency shift for determining the guard interval of each type. Especially, the UE may report the maximum delay and the maximum Doppler frequency shift for determining the guard interval of each type of channels/signals respectively.

In some embodiments, the second method for reporting the CSI is that, in addition to reporting the RI, the PMI and the CQI, the UE needs to report the maximum delay and maximum Doppler frequency shift for determining the guard interval required by the first type of channels/signals, and the delay range and Doppler frequency shift range for determining the guard interval required by the second type of channels/signals. The above delay range may be determined by the minimum delay and the maximum delay. The range of the Doppler frequency shift may be determined by an absolute value of a minimum Doppler frequency shift and an absolute value of a maximum Doppler frequency shift. In a case that it is considered that positive and negative Doppler frequency shifts of the channel may be asymmetric, the above range of the Doppler frequency shift may also include a range of a positive Doppler frequency shift and a range of a negative Doppler frequency shift. With the method, since the minimum delay and/or the minimum Doppler frequency shift are reported, the base station may schedule different channels/signals on REs of adjacent DD domains, thus avoiding the interference between these channels/signals. Similar to the first method, reporting the delay range and the range of the Doppler frequency shift for the auxiliary guard interval may be used to distinguish more channels/signal types or each type of channels/signals.

In some embodiments, for the above methods, the UE reports the common fractional Doppler frequency shift and/or delay of the channel h(τ,v) in a case that the fractional Doppler frequency shift and/or delay is considered. Alternatively, the UE may increase the reported maximum delay and the reported maximum Doppler frequency shift of the channel h(τ,v) in a case that the influence of the fractional Doppler frequency shift and/or delay is considered.

In some embodiments, for the above method, the UE obtains CSI information by measuring a reference signal, such as a CSI-RS. When a possible path of the channel h(τ,v) is measured, the UE needs a criterion to determine whether the path exists. For example, in a case that a measurement value of the path exceeds a threshold, it is considered that the path exists, otherwise it is considered that the measurement value only includes noise. The above threshold may be determined by the UE. For example, it is assumed that the standard deviation of the noise is σ, the threshold may be set to 3σ. Alternatively, it is assumed that the above threshold is cσ, the base station may configure the parameter c for channel measurement of the UE. Alternatively, the base station may directly configure a number x of strong paths that the UE needs to report. In a case that the number x of paths actually detected by the UE is less than X, the channel gains of (X-x) paths may be filled with 0 by the UE. Alternatively, the base station may configure a threshold Y%, and a ratio of a total channel gain of respective paths reported by the UE to a total channel gain of all the P paths of the channel h(τ,v) is greater than or equal to Y%. Alternatively, the base station may configure a threshold Y%, and a ratio of a total channel power of respective path reported by the UE to a total channel power of all the P paths of the channel h(τ,v) is greater than or equal to Y%. The UE may measure the RI, the PMI, the CQI, etc., based on the detected path of the channel h(τ,v).

In embodiments of the disclosure, some or all of the steps and alternative implementations of the steps may be arbitrarily combined with some or all of the steps in other embodiments, and may also be arbitrarily combined with alternative implementations in other embodiments.

Embodiments of the disclosure also provide an apparatus for implementing any of the above methods, for example, an apparatus including units or modules for implementing respective steps executed by the terminal in any of the above methods. For another example, another apparatus is also proposed, including units or modules for implementing respective steps executed by the network device (such as the access network device, the core network function node, score network device, etc.) in any of the above methods.

It should be understood that the division of units or modules in the above apparatuses is merely a division of logical functions. In an actual implementation, the units may be fully or partially integrated into a single physical entity or may be physically separated. In addition, the units or modules in the apparatus may be realized in the form of a processor calling software. For example, the apparatus includes a processor, and the processor is connected to a memory for storing instructions. The processor calls the instructions stored in the memory to realize any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be realized in the form of a hardware circuit. Some or all of the functions of the units or modules may be realized via a design of the hardware circuit. The above hardware circuit may be understood as one or more processors. For example, in an implementation, the above hardware circuit is an application-specific integrated circuit (ASIC), and some or all of the functions of the above units or modules are realized by designing the logical relationship of elements in the circuit. For another example, in another implementation, the above hardware circuit may be realized by a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully realized in the form of the processor calling software, or fully realized in the form of the hardware circuit, or partially realized in the form of the processor calling software and the remaining part realized in the form of the hardware circuit.

In embodiments of the disclosure, the processor is a circuit with a signal processing capability. In an implementation, the processor may be a circuit capable of reading and running instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit realized as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

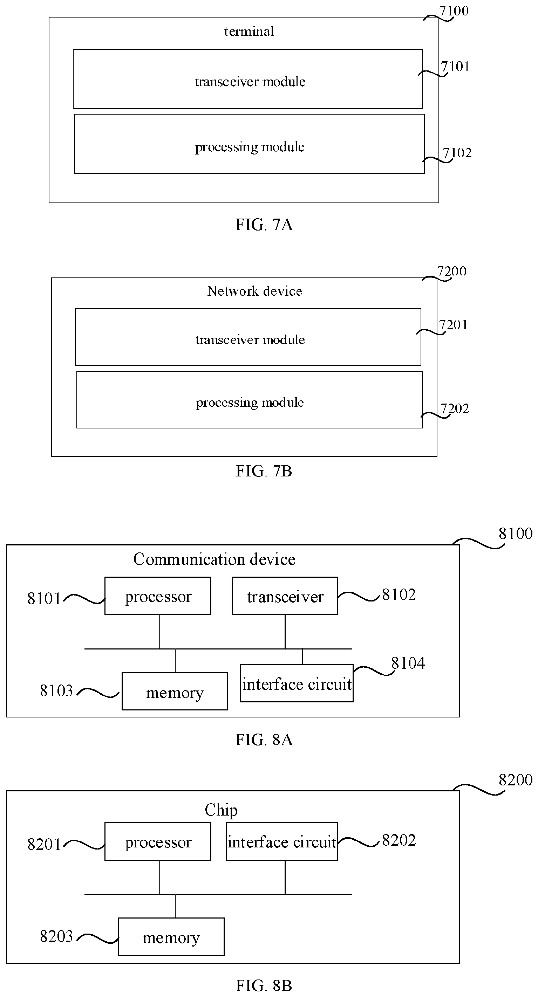

FIG. 7A is a block diagram illustrating a terminal according to an exemplary embodiment. As illustrated in FIG. 7A, the terminal 7100 includes at least one of a transceiver module 7101 or a processing module 7102. In some embodiments, the processing module is configured to measure a reference signal for sounding a delay Doppler domain channel; and send CSI to a network device based on a measurement result, in which the CSI includes first information, and the first information is used to determine a guard interval of at least one type of signals or channels, and the guard interval is at least one resource element in a delay Doppler domain. Alternatively, the above transceiver module is configured to execute at least one of communication steps such as sending and/or receiving steps (such as step S201 and step S203, but not limited thereto) executed by the terminal 101 in any of the above methods, which is not repeated here. Alternatively, the above processing module is used to execute at least one of other steps (such as step S202 and step S204, but not limited thereto) executed by the terminal 101 in any of the above methods, which is not repeated here.

FIG. 7B is a block diagram illustrating a network device according to embodiments of the disclosure. As illustrated in FIG. 7B, the network device 7200 may include: at least one of a transceiver module 7101 or a processing module 7102. In some embodiments, the transceiver module is configured to send a reference signal for sounding a delay Doppler domain channel to a terminal; and receive CSI sent by the terminal, in which the CSI includes first information. In some embodiments, the processing module is configured to determine a guard interval of at least one type of signals or channels based on the first information, in which, the guard interval is at least one resource element in a delay Doppler domain. Alternatively, the transceiver module is used to execute at least one of communication steps such as such as sending steps and/or receiving steps (such as step S201 and step S203, but not limited thereto) executed by the network device 102 in any of the above methods, which is not repeated here. Alternatively, the above processing module is configured to execute at least one of other steps (such as step S202 and step S204, but not limited thereto) executed by the network device 102 in any of the above methods, which is not described in detail here.

In some embodiments, the transceiver module may include a sending module and/or a receiving module. The sending module and/or the receiving module may be separate or integrated together. Alternatively, the transceiver module may be interchanged with the transceiver.

In some embodiments, the processing module may be one module or may include multiple sub-modules. Alternatively, the multiple sub-modules respectively execute all or some of the steps required by the processing module. Alternatively, the processing module may be interchanged with the processor.

FIG. 8A is a block diagram illustrating a communication device 8100 according to embodiments of the disclosure. The communication device 8100 may be a network device (such as, an access network device or a core network device, etc.), or a terminal (such as, a user equipment, etc.), or a chip, a chip system, or a processor, etc., that supports the network device to realize any one of the above methods, or a chip, a chip system, or a processor, etc., that supports the terminal to realize any one of the above methods. The communication device 8100 may be configured to realize the method in the above method embodiments. For details, please refer to the descriptions in the above method embodiments.

As illustrated in FIG. 8A, the communication device 8100 includes one or more processors 8101. The processor 8101 may be a general-purpose processor or a dedicated processor, such as, a baseband processor and a central processor. The baseband processor is configured to process communication protocols and communication data. The central processor is configured to control the communication device (such as, a base station, a baseband chip, a terminal, a terminal chip, a DU, or a CU) to execute programs, and process data of the programs. Alternatively, the communication device 8100 is configured to execute any one of the above methods. Alternatively, the one or more processor 8101 are configured to call instructions to cause the communication device 8100 to execute any one of the above methods.

In some embodiments, the communication device 8100 also includes one or more transceivers 8102. In a case that the communication device 8100 includes the one or more transceivers 8102, at least one of communication steps such as sending and receiving steps (such as step S201, step S203, but not limited thereto) in the above methods is executed by the transceiver 8102, and at least one of other steps (such as step 202 and step 204, but not limited thereto) is realized by the processor 8101. In alternative embodiments, the transceiver may include a receiver and/or a transmitter. The receiver and the transmitter may be separate or integrated. Alternatively, terms such as transceiver, transceiver unit, transceiver machine, transceiver circuit, interface circuit, interface, etc., may be used interchangeably; terms such as transmitter, sending unit, transmitter machine, sending circuit, etc., may be used interchangeably; and terms such as receiver, receiving unit, receiver machine, receiving circuit, etc., may be used interchangeably.

In some embodiments, the communication device 8100 also includes one or more memories 8103 for storing instructions. Alternatively, all or some of the memories 8103 may also be located outside the communication device 8100. In an alternative embodiment, the communication device 8100 may also include one or more interface circuits 8104. Alternatively, the interface circuit 8104 is connected to the memory 8102 and may be configured to receive data from the memory 8102 or other devices, and send data to the memory 8102 or other devices. For example, the interface circuit 8104 may read instructions stored in the memory 8102, and send the instructions to the processor 8101.

The communication device 8100 in the description of the above embodiments may be the network device or the terminal, but the scope of the communication device 8100 described in the disclosure is not limited herein. The structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs, alternatively, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8B is a block diagram illustrating a chip according to embodiments of the disclosure. For a case that the communication device 8100 may be a chip or a chip system, please refer to the block diagram of the chip 8200 illustrated in FIG. 8B, which is not limited herein.

The chip 8200 includes one or more processors 8201, and the chip 8200 is configured to execute any one of the above communication methods.

In some embodiments, the chip 8200 also includes one or more interface circuits 8202. Alternatively, terms such as interface circuit, interface, and transceiver pin may be used interchangeably. In some embodiments, the chip 8200 also includes one or more memories 8203 for storing data. Alternatively, all or some of the memory 8203 may be located outside the chip 8200. Alternatively, the interface circuit 8202 is connected to the memory 8203 and may be used to receive data from the memory 8203 or other devices, and send the data to the memory 8203 or other devices. For example, the interface circuit 8202 may read data stored in the memory 8203 and send the data to the processor 8201.

In some embodiments, the interface circuit 8202 is configured to execute at least one of communication steps such as sending and/or receiving steps (such as step S201 and step S203, but not limited thereto) in the above method. The interface circuit 8202 executes the communication steps such as sending and/or receiving steps in the above method, which means that the interface circuit 8202 executes data interaction between the processor 8201, the chip 8200, the memory 8203 or the transceiver devices. In some embodiments, the processor 8201 executes at least one of other steps (such as, step S202, step S204, but not limited thereto).

The modules and/or devices described in various embodiments such as virtual devices, physical devices, chips, etc., may be arbitrarily combined or separated based on a situation. Alternatively, some or all of the steps may be executed by multiple modules and/or devices in cooperation, which is not limited here.

The disclosure also provides a storage medium for storing instructions. When the instructions are run on the communication device 8100, the communication device 8100 is caused to execute any one of the above methods. Alternatively, the storage medium is an electronic storage medium. Alternatively, the storage medium is a computer-readable storage medium, but may also be a storage medium readable by other devices. Alternatively, the storage medium may be a non-transitory storage medium, but may also be a transitory storage medium.

The disclosure also provides a program product. When the program product is executed by the communication device 8100, the communication device 8100 is caused to execute any one of the above methods. Alternatively, the program product is a computer program product.

The disclosure also provides a computer program. When the computer program is run on a computer, the computer is caused to execute any one of the above methods.

## Claims

1. A communication method, executed by a terminal, comprising:
measuring a reference signal for sounding a delay Doppler domain channel; and
sending channel state information (CSI) to a network device based on a measurement result, wherein the CSI comprises first information, and the first information is used to determine a guard interval of at least one type of signals or channels, and the guard interval is at least one resource element in a delay Doppler domain.

2. The communication method of claim 1, wherein the first information comprises at least one first measurement information, one of the at least one first measurement information corresponds to one channel path of the delay Doppler domain channel, and the first measurement information comprises a parameter value of at least one of:
a first parameter item, indicating a delay of the channel path;
a second parameter item, indicating a Doppler frequency shift of the channel path;
a third parameter item, indicating a complex channel gain of the channel path;
a fourth parameter item, indicating an interference level of the channel path; or
a fifth parameter item, indicating a weighted complex channel gain of the channel path.

3. The communication method of claim 2, wherein
the first information comprises first measurement information of all channel paths.

4. The communication method of claim 2, wherein
the first information comprises first measurement information of a first channel path, and the first channel path comprises at least one channel path with a channel power greater than a first threshold.

5. The communication method of claim 2, wherein
the first information comprises first measurement information of first channel paths, and the first channel paths are first N channel paths with channel powers in a descending order.

6. The communication method of claim 4, wherein
a number of channel paths with the channel power greater than the first threshold is less than N, and the first channel path further comprises a channel path with the complex channel gain filled to zero, wherein a sum of the number of channel paths with the channel power greater than the first threshold and a number of channel paths with the complex channel gain filled to zero is N.

7. The communication method of claim 5 or 6, wherein
N is configured by the network device.

8. The communication method of claim 2, wherein
the first information comprises first measurement information of first channel paths, the first channel paths are first M channel paths with channel powers in a descending order, and a ratio of a sum of channel powers of all the first channel paths to a sum of channel powers of all channel paths is greater than or equal to a second threshold, wherein the second threshold is configured by the network device.

9. The communication method of any one of claims 2 to 8, wherein the parameter value of each parameter item in the first measurement information is determined by any of:
determining an actual measurement value of the parameter item as the parameter value of the parameter item, wherein the actual measurement value is an integer or a fraction;
determining an integer part of an actual measurement value of the parameter item as the parameter value of the parameter item, wherein the actual measurement value is a fraction;
determining an integer part of an actual measurement value of the parameter item as the parameter value of the parameter item, wherein the actual measurement value is a fraction, and the first measurement information further comprises a sixth parameter item, and the sixth parameter item indicates a common decimal part of all the parameter items; or
determining an integer obtained after increasing an actual measurement value of the parameter item as the parameter value of the parameter item, wherein the actual measurement value is a fraction.

10. The communication method of any one of claims 2 to 8, wherein
the parameter value of the third parameter item in the first measurement information of the first channel path is determined by determining a value obtained after increasing an actual measurement value of the third parameter item as the parameter value of the third parameter item;
the parameter value of the fourth parameter item in the first measurement information of the first channel path is determined by determining a value obtained after decreasing an actual measurement value of the fourth parameter item as the parameter value of the fourth parameter item;
the parameter value of the fifth parameter item in the first measurement information of the first channel path is determined by determining a value obtained after increasing an actual measurement value of the fifth parameter item as the parameter value of the fifth parameter item.

11. The communication method of any one of claims 4 to 8, wherein
the first information further comprises a first maximum delay and/or a first maximum Doppler frequency shift, wherein the first maximum delay is a maximum parameter value in the first parameter items of all channel paths, and the first maximum Doppler frequency shift is a maximum parameter value in the second parameter items of all the channel paths.

12. The communication method of any one of claims 2 to 11, wherein
the interference level comprises an interference power and/or a noise power.

13. The communication method of any one of claims 2 to 12, wherein
the weighted complex channel gain is determined based on the complex channel gain and the interference level, or the weighted complex channel gain is determined based on a signal-to-noise ratio.

14. The communication method of claim 1, wherein the first information comprises at least one second measurement information, one of the at least one second measurement information corresponds to one type of signals or channels, and the second measurement information comprises a parameter value of at least one of:
a seventh parameter item, indicating a second maximum delay of a second channel path;
an eighth parameter item, indicating a second maximum Doppler frequency shift of a second channel path;
a ninth parameter item, indicating an upper delay limit and a lower delay limit of a second channel path, and the upper delay limit and the lower delay limit being used to determine a delay range; or
a tenth parameter item, indicating an upper limit of a Doppler frequency shift and a lower limit of the Doppler frequency shift of a second channel path, and the upper limit of the Doppler frequency shift and the lower limit of the Doppler frequency shift being used to determine a range of the Doppler frequency shift.

15. The method of claim 14, wherein the parameter value of each parameter item in the second measurement information is determined by any of:
determining an integer obtained after increasing an actual measurement value of the parameter item as the parameter value of the parameter item, wherein the actual measurement value is a fraction; or
determining an integer part of the actual measurement value of the parameter item as the parameter value of the parameter item, wherein the actual measurement value is a fraction, the second measurement information further comprises an eleventh parameter item, and the eleventh parameter item indicates a common decimal part of all the parameter items.

16. The method of claim 14 or 15, wherein
the second channel path comprises at least one channel path with a channel power greater than a third threshold.

17. The method of claim 14 or 15, wherein
second channel paths exist and are first X channel paths with channel powers in a descending order, and the X is configured by the network device.

18. The method of claim 14 or 15, wherein
second channel paths exist and are first Y channel paths with channel powers in a descending order, a ratio of a sum of the channel powers of all the second channel paths to a sum of channel powers of all channel paths is greater than or equal to a fourth threshold, and the fourth threshold is configured by the network device.

19. The method of any one of claims 14 to 18, wherein the CSI further comprises at least one of a rank indicator (RI) of a channel, a precoding matrix indicator (PMI), or a channel quality indicator (CQI).

20. A communication method, executed by a network device, comprising:
sending a reference signal for sounding a delay Doppler domain channel to a terminal;
receiving channel state information (CSI) sent by the terminal, wherein the CSI comprises first information; and
determining a guard interval of at least one type of signals or channels based on the first information, wherein the guard interval is at least one resource element in a delay Doppler domain.

21. A terminal, comprising:
a processing module, configured to measure a reference signal for sounding a delay Doppler domain channel; and send channel state information (CSI) to a network device based on a measurement result, wherein the CSI comprises first information, and the first information is used to determine a guard interval of at least one type of signals or channels, and the guard interval is at least one resource element in a delay Doppler domain.

22. A network device, comprising:
a transceiver module, configured to send a reference signal for sounding a delay Doppler domain channel to a terminal; and receive channel state information (CSI) sent by the terminal, wherein the CSI comprises first information; and
a processing module, configured to determine a guard interval of at least one type of signals or channels based on the first information, wherein the guard interval is at least one resource element in a delay Doppler domain.

23. A terminal, comprising:
one or more processors; and
a memory, coupled to the one or more processors and configured to store executable instructions, wherein when the executable instructions are executed by the one or more processors, the terminal is caused to execute the communication method of any one of claims 1 to 19.

24. A network device, comprising:
one or more processors; and
a memory, coupled to the one or more processors and configured to store executable instructions, wherein when the executable instructions are executed by the one or more processors, the network device is caused to execute the communication method of claim 20.

25. A communication system, comprising a terminal and a network device, wherein the terminal is configured to realize the communication method of any one of claims 1 to 19, and the network device is configured to realize the communication method of claim 20.

26. A storage medium for storing instructions, wherein when the instructions are run on a communication device, the communication device is caused to execute the communication method of any one of claims 1 to 20.
